# EUROPEAN PATENT SPECIFICATION

(11) **EP 4 428 462 B1**
(45) Date of publication and mention of the grant of the patent: **30.09.2026**
(21) Application number: 21967197.1
(22) Date of filing: 09.12.2021
(51) Int. Cl.: F24F 11/52, F24F 11/63, G05B 15/02

(54) **FACTOR IDENTIFICATION DEVICE, FACTOR IDENTIFICATION METHOD, AND APPLIANCE CONTROL DEVICE**
FAKTORIDENTIFIZIERUNGSVORRICHTUNG, FAKTORIDENTIFIZIERUNGSVERFAHREN UND ANWENDUNGSSTEUERUNGSVORRICHTUNG
DISPOSITIF D'IDENTIFICATION DE FACTEUR, PROCÉDÉ D'IDENTIFICATION DE FACTEUR, ET DISPOSITIF DE COMMANDE D'APPAREIL

(43) Date of publication of application: 11.09.2024
(73) Proprietor: MITSUBISHI ELECTRIC CORPORATION, Chiyoda-ku Tokyo 100-8310 (JP)
(72) Inventor: YOKOSUKA, Yusuke, Tokyo 100-8310 (JP); IIZAWA, Daisuke, Tokyo 100-8310 (JP)
(74) Representative: Pfenning, Meinig & Partner mbB
(86) International application number: PCT/JP2021/045229
(87) International publication number: WO 2023/105699

(56) References cited:
- WO-A1-2020/035910
- JP-A- 2013 083 402
- JP-A- 2017 048 962
- JP-A- H10 288 376
- US-A1- 2021 222 905

## Description

### TECHNICAL FIELD

The present disclosure relates to a factor identification device, a factor identification method, and an appliance control device.

### BACKGROUND ART

There is a control device that controls an appliance to be controlled. For example, Patent Literature 1 discloses an air conditioning system including a control device that controls an air conditioner as an appliance to be controlled. The control device included in the air conditioning system includes, in addition to a control unit that controls the air conditioner, a notification unit that causes a display unit to display a determination factor of a control content determined by the control unit. For example, when the control content is control for switching from cooling to air blowing, the notification unit causes the display unit to display a determination factor of "it is predicted that neither a temperature nor a humidity will rise even when a change to air blowing is performed" as a determination factor of the control content. The determination factor of "it is predicted that neither a temperature nor a humidity will rise even when a change to air blowing is performed" includes two determination factors. One of the two determination factors is "it is predicted that a temperature will not rise even when a change to air blowing is performed", and the other determination factor is "it is predicted that a humidity will not rise even when a change to air blowing is performed".

US 2021/222905 describes an air-conditioning device that includes a compressor to compress a refrigerant and circulates the refrigerant through a refrigerant pipe, a heat exchanger to cause heat exchange between air in the target space and the refrigerant circulating through the refrigerant pipe, and a blower to feed air in the target space to the heat exchanger.

JP H10 288376 describes an air conditioning monitor controller that comprises a control determining means for determining whether or not room temperature can be changed to a temperature setting value and an alarm display means for displaying that the room temperature cannot be set to the temperature setting value.

### CITATION LIST

### PATENT LITERATURE

Patent Literature 1: WO 2020/035910 A

### SUMMARY OF INVENTION

### TECHNICAL PROBLEM

When a control device that controls an appliance to be controlled determines a control content using, for example, artificial intelligence, a black box property of the control device is increased. Due to increase of the black box property of the control device, a user may not understand, in some cases, that the control content determined by the control device is an appropriate control content. It is useful for the user to know a reason why the control content is determined in order to understand that the control content determined by the control device is appropriate.

A determination factor of the control content is roughly divided into a direct determination factor of the control content and an indirect determination factor of the control content. The direct determination factor of the control content is a factor corresponding to a physical quantity used for determination of the control content in a final step in which the control content is determined among a plurality of steps included in a process of determining the control content by a control unit. The indirect determination factor of the control content is a factor used for calculation of the physical quantity in a step at a stage earlier than the final step and corresponding to an observation value of the environment. Therefore, the direct determination factor of the control content has a deeper relationship with the control content than the indirect determination factor of the control content. Therefore, even when the user cannot easily grasp a reason why the control content is determined even by looking at the indirect determination factor of the control content, the user may be able to grasp the reason why the control content is determined by looking at the direct determination factor of the control content.

However, when a determination factor of a certain control content can be displayed and there are a direct determination factor and an indirect determination factor as the determination factor of the control content, a conventional control device that controls an appliance to be controlled does not determine and display the direct determination factor out of these determination factors disadvantageously.

For example, in the air conditioning system disclosed in Patent Literature 1, when there is a plurality of determination factors, the notification unit causes the display unit to display all of the plurality of determination factors. However, it is not identified on the display unit whether each of these determination factors displayed by the display unit is a direct determination factor of the control content or an indirect determination factor of the control content. In this way, in the conventional control device, even when a user looks at display of the display unit, the user cannot find which determination factor is a direct determination factor or an indirect determination factor of the control content, and thus, the user cannot easily grasp a reason why the control content is determined from the display in some cases.

The present disclosure has been made in order to solve the above problems, and an object of the present disclosure is to obtain a factor identification device and a factor identification method capable of presenting a direct determination factor of a control content to a user.

### SOLUTION TO PROBLEM

The invention is defined by the apparatus of claim 1 and the method of claim 8. Optional aspects of the invention are provided by the dependent claims.

### ADVANTAGEOUS EFFECTS OF INVENTION

According to the present disclosure, it is possible to present a direct determination factor of a control content to a user.

### BRIEF DESCRIPTION OF DRAWINGS

FIG. 1 is a configuration diagram illustrating an appliance control device including a factor identification device 5 according to a first embodiment.
FIG. 2 is a hardware configuration diagram illustrating hardware of the appliance control device according to the first embodiment.
FIG. 3 is a hardware configuration diagram of a computer in a case where the appliance control device is implemented by software, firmware, or the like.
FIG. 4 is a flowchart illustrating a factor identification method which is a processing procedure performed in the factor identification device 5.
FIG. 5 is an explanatory diagram illustrating a control content, a physical quantity, and an observation value determined by a prediction unit 4a.
FIG. 6 is an explanatory diagram illustrating an example of a decision tree.
FIG. 7 is an explanatory diagram illustrating an example of a decision tree including a specific example of a future control content, a specific example of a direct determination factor, and a specific example of an indirect determination factor.
FIG. 8 is an explanatory diagram illustrating an example of a decision tree including a specific example of a future control content, a specific example of a direct determination factor, and a specific example of an indirect determination factor.
FIG. 9 is an explanatory diagram illustrating an example of a decision tree including a specific example of a future control content, a specific example of a direct determination factor, and a specific example of an indirect determination factor.
FIG. 10 is an explanatory diagram illustrating an example of a direct determination factor of a control content.
FIG. 11 is a configuration diagram illustrating an appliance control device including a factor identification device 5 according to a second embodiment.
FIG. 12 is a hardware configuration diagram illustrating hardware of the appliance control device according to the second embodiment.
FIG. 13A is an explanatory diagram illustrating an example of a direct determination factor of a control content.
FIG. 13B is an explanatory diagram illustrating an example of an indirect determination factor of a control content.
FIG. 13C is an explanatory diagram illustrating an example of an indirect determination factor of a control content.
FIG. 13D is an explanatory diagram illustrating an example of an indirect determination factor of a control content.
FIG. 14 is a configuration diagram illustrating an appliance control device including a factor identification device 5 according to a third embodiment.
FIG. 15 is a hardware configuration diagram illustrating hardware of the appliance control device according to the third embodiment.
FIG. 16 is an explanatory diagram illustrating an example of a template.
FIG. 17 is a configuration diagram illustrating an appliance control device including a factor identification device 5 according to a fourth embodiment.
FIG. 18 is a hardware configuration diagram illustrating hardware of the appliance control device according to the fourth embodiment.
FIG. 19 is an explanatory diagram illustrating a graph indicating a temporal change in thermal load.
FIG. 20 is an explanatory diagram illustrating a graph indicating a temporal change in thermal load.
FIG. 21 is an explanatory diagram illustrating a graph indicating a temporal change in solar radiation amount observation value.
FIG. 22 is an explanatory diagram illustrating a graph indicating a temporal change in outside air observation value.

### DESCRIPTION OF EMBODIMENTS

Hereinafter, in order to describe the present disclosure in more detail, embodiments for carrying out the present disclosure will be described with reference to the attached drawings.

### First embodiment.

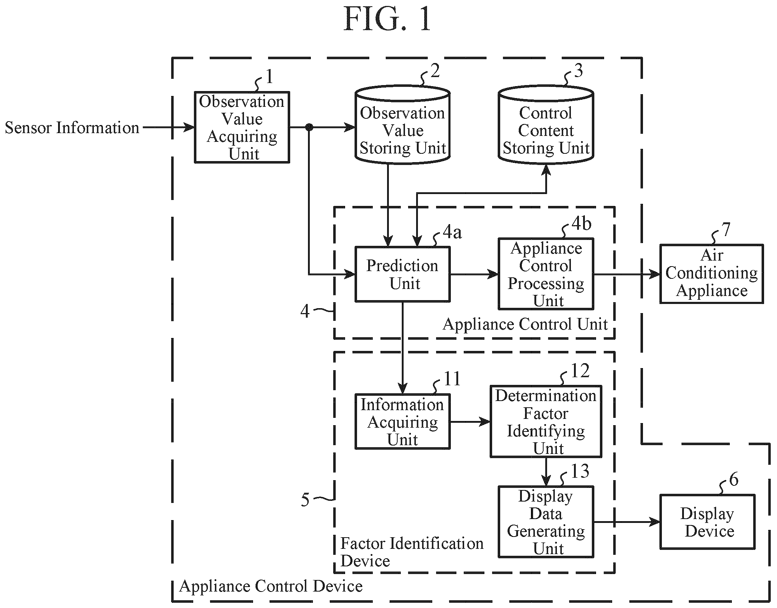

FIG. 1 is a configuration diagram illustrating an appliance control device including a factor identification device 5 according to a first embodiment.

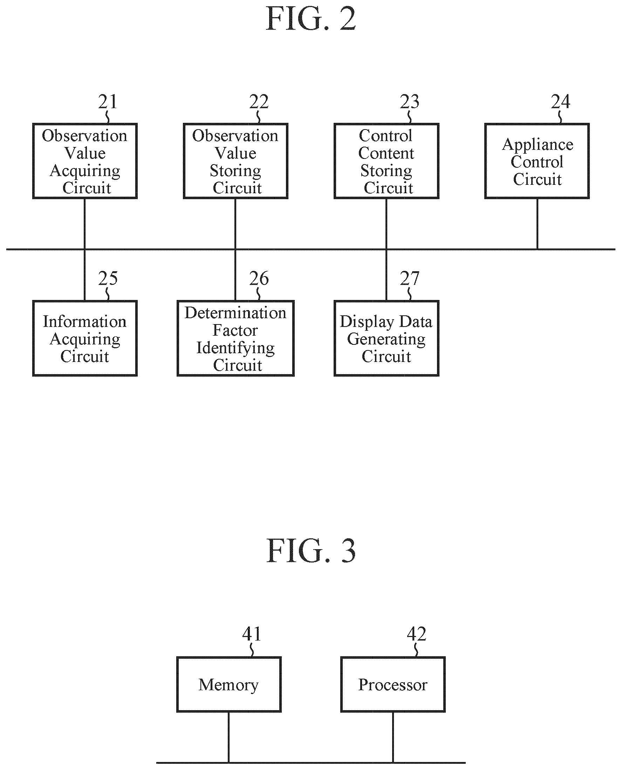

FIG. 2 is a hardware configuration diagram illustrating hardware of the appliance control device according to the first embodiment.

The appliance control device illustrated in FIG. 1 includes an observation value acquiring unit 1, an observation value storing unit 2, a control content storing unit 3, an appliance control unit 4, the factor identification device 5, and a display device 6.

An appliance to be controlled by the appliance control device illustrated in FIG. 1 is, for example, an air conditioning appliance, a boiler, or a robot.

The appliance control device illustrated in FIG. 1 will be described by assuming that the appliance to be controlled is an air conditioning appliance 7 for convenience of description.

The observation value acquiring unit 1 is implemented by, for example, an observation value acquiring circuit 21 illustrated in FIG. 2.

The observation value acquiring unit 1 acquires sensor information as an observation value of an environment in which the air conditioning appliance 7 is disposed as an appliance to be controlled.

The observation value acquiring unit 1 outputs the sensor information to the observation value storing unit 2 and the appliance control unit 4.

Examples of the sensor include a temperature sensor, a humidity sensor, and a carbon dioxide sensor.

The temperature sensor observes a temperature of the environment in which the air conditioning appliance 7 is disposed, and outputs sensor information indicating the temperature as an observation value to the observation value acquiring unit 1.

The humidity sensor observes a humidity of the environment in which the air conditioning appliance 7 is disposed, and outputs sensor information indicating the humidity as an observation value to the observation value acquiring unit 1.

The carbon dioxide sensor observes a carbon dioxide concentration of the environment in which the air conditioning appliance 7 is disposed, and outputs sensor information indicating the carbon dioxide concentration as an observation value to the observation value acquiring unit 1.

The observation value storing unit 2 is implemented by, for example, an observation value storing circuit 22 illustrated in FIG. 2.

The observation value storing unit 2 stores sensor information output from the observation value acquiring unit 1 as a past observation value of the environment in which the air conditioning appliance 7 is disposed.

The control content storing unit 3 is implemented by, for example, a control content storing circuit 23 illustrated in FIG. 2.

The control content storing unit 3 stores a control content determined by the appliance control unit 4 as a past control content for the air conditioning appliance 7.

The appliance control unit 4 includes a prediction unit 4a and an appliance control processing unit 4b.

The appliance control unit 4 is implemented by, for example, an appliance control circuit 24 illustrated in FIG. 2.

The appliance control unit 4 determines a future control content for the air conditioning appliance 7, and controls the air conditioning appliance 7 according to the control content.

The prediction unit 4a acquires a current observation value of the environment in which the air conditioning appliance 7 is disposed from the observation value acquiring unit 1, acquires a past observation value of the environment in which the air conditioning appliance 7 is disposed from the observation value storing unit 2, and acquires a past control content for the air conditioning appliance 7 from the control content storing unit 3.

The prediction unit 4a determines a future control content for the air conditioning appliance 7 from the current observation value, the past observation value, and the past control content.

The prediction unit 4a outputs control information indicating the determined control content to the appliance control processing unit 4b.

In addition, the prediction unit 4a outputs, to the factor identification device 5, physical quantity information indicating a physical quantity of the environment in which the air conditioning appliance 7 is disposed, the physical quantity information being used in the final step of determining the control content among a plurality of steps included in a process of determining the control content. The physical quantity of the environment in which the air conditioning appliance 7 is disposed is, for example, a thermal load of the environment in which the air conditioning appliance 7 is disposed or a ventilation amount of the environment in which the air conditioning appliance 7 is disposed.

The appliance control processing unit 4b controls the air conditioning appliance 7 according to the control content indicated by the control information output from the prediction unit 4a.

The factor identification device 5 includes an information acquiring unit 11, a determination factor identifying unit 12, and a display data generating unit 13.

The factor identification device 5 identifies a direct determination factor of the control content determined by the appliance control unit 4, and causes the display device 6 to display the direct determination factor. The direct determination factor of the control content is a factor corresponding to a physical quantity used in the final step of determining the control content among the plurality of steps included in the process of determining the control content by the prediction unit 4a.

The display device 6 includes a display (not illustrated).

The display device 6 displays the direct determination factor identified by the factor identification device 5 on the display.

The information acquiring unit 11 is implemented by, for example, an information acquiring circuit 25 illustrated in FIG. 2.

The information acquiring unit 11 acquires, from the prediction unit 4a of the appliance control unit 4, physical quantity information indicating a physical quantity used in the final step of determining the control content among the plurality of steps included in the process of determining the control content.

The information acquiring unit 11 outputs the physical quantity information to the determination factor identifying unit 12.

The determination factor identifying unit 12 is implemented by, for example, a determination factor identifying circuit 26 illustrated in FIG. 2.

The determination factor identifying unit 12 acquires physical quantity information from the information acquiring unit 11.

The determination factor identifying unit 12 identifies a direct determination factor of the control content determined by the appliance control unit 4 on the basis of the physical quantity indicated by the physical quantity information.

The determination factor identifying unit 12 outputs determination factor information indicating the identified direct determination factor to the display data generating unit 13.

The display data generating unit 13 is implemented by, for example, a display data generating circuit 27 illustrated in FIG. 2.

The display data generating unit 13 acquires the determination factor information indicating the direct determination factor from the determination factor identifying unit 12.

The display data generating unit 13 generates display data for displaying the determination factor indicated by the determination factor information.

The display data generating unit 13 outputs the display data to the display device 6.

In FIG. 1, it is assumed that each of the observation value acquiring unit 1, the observation value storing unit 2, the control content storing unit 3, the appliance control unit 4, the information acquiring unit 11, the determination factor identifying unit 12, and the display data generating unit 13, which are constituent elements of the appliance control device, is implemented by dedicated hardware as illustrated in FIG. 2. That is, it is assumed that the appliance control device is implemented by the observation value acquiring circuit 21, the observation value storing circuit 22, the control content storing circuit 23, the appliance control circuit 24, the information acquiring circuit 25, the determination factor identifying circuit 26, and the display data generating circuit 27.

To each of the observation value storing circuit 22 and the control content storing circuit 23, for example, a nonvolatile or volatile semiconductor memory such as random access memory (RAM), read only memory (ROM), flash memory, erasable programmable read only memory (EPROM), or electrically erasable programmable read only memory (EEPROM), a magnetic disk, a flexible disk, an optical disc, a compact disc, a mini disc, or a digital versatile disc (DVD) corresponds.

To each of the observation value acquiring circuit 21, the appliance control circuit 24, the information acquiring circuit 25, the determination factor identifying circuit 26, and the display data generating circuit 27, for example, a single circuit, a composite circuit, a programmed processor, a parallel-programmed processor, an application specific integrated circuit (ASIC), a field-programmable gate array (FPGA), or a combination thereof corresponds.

The constituent elements of the appliance control device are not limited to those implemented by dedicated hardware, and the appliance control device may be implemented by software, firmware, or a combination of software and firmware.

Software or firmware is stored as a program in a memory of a computer. The computer means hardware that executes a program. To the computer, for example, a central processing unit (CPU), a central processing device, a processing device, an arithmetic device, a microprocessor, a microcomputer, a processor, or a digital signal processor (DSP) corresponds.

FIG. 3 is a hardware configuration diagram of a computer in a case where the appliance control device is implemented by software, firmware, or the like.

In a case where the appliance control device is implemented by software, firmware, or the like, the observation value storing unit 2 and the control content storing unit 3 are constituted on a memory 41 of the computer. A program for causing the computer to execute a processing procedure performed in each of the observation value acquiring unit 1, the appliance control unit 4, the information acquiring unit 11, the determination factor identifying unit 12, and the display data generating unit 13 is stored in the memory 41. A processor 42 of the computer executes the program stored in the memory 41.

FIG. 2 illustrates an example in which each of the constituent elements of the appliance control device is implemented by dedicated hardware, and FIG. 3 illustrates an example in which the appliance control device is implemented by software, firmware, or the like. However, this is merely an example, and some of the constituent elements of the appliance control device may be implemented by dedicated hardware, and the remaining constituent elements may be implemented by software, firmware, or the like.

Next, an operation of the appliance control device illustrated in FIG. 1 will be described.

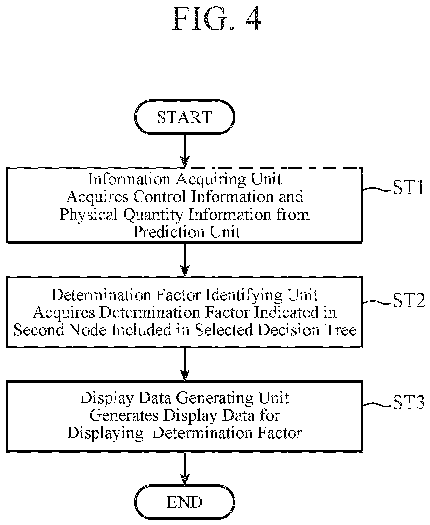

FIG. 4 is a flowchart illustrating a factor identification method which is a processing procedure performed in the factor identification device 5.

The observation value acquiring unit 1 acquires sensor information as an observation value of an environment in which the air conditioning appliance 7 as an appliance to be controlled is disposed.

Specifically, the observation value acquiring unit 1 acquires sensor information from each of one or more sensors among a temperature sensor, a humidity sensor, a carbon dioxide sensor, and the like.

The observation value acquiring unit 1 outputs each piece of the sensor information to the observation value storing unit 2 and the appliance control unit 4.

The prediction unit 4a of the appliance control unit 4 includes, for example, a program for reproducing artificial intelligence (AI).

The prediction unit 4a acquires sensor information from the observation value acquiring unit 1 as a current observation value of the environment in which the air conditioning appliance 7 is disposed.

In addition, the prediction unit 4a acquires past sensor information stored in the observation value storing unit 2 as a past observation value of the environment in which the air conditioning appliance 7 is disposed.

In addition, the prediction unit 4a acquires a past control content determined by the appliance control unit 4, stored in the control content storing unit 3, as a past control content for the air conditioning appliance 7.

The prediction unit 4a determines a future control content for the air conditioning appliance 7 from the current observation value, the past observation value, and the past control content using artificial intelligence. That is, the prediction unit 4a determines the future control content by executing a determination process including a plurality of steps.

Since the process itself of determining the control content using artificial intelligence is a known technique, detailed description thereof is omitted. Here, a control content determination process example will be briefly described.

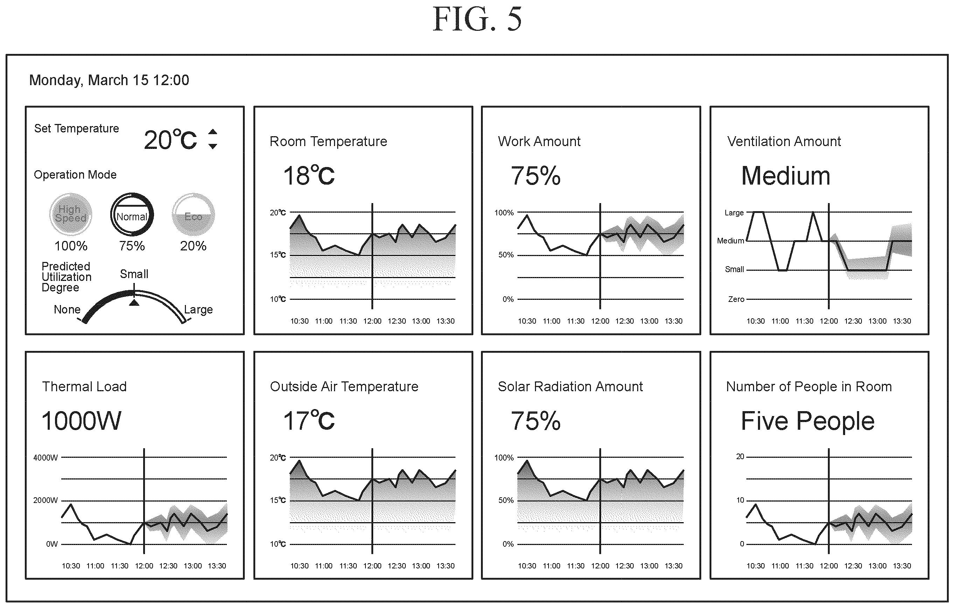

FIG. 5 is an explanatory diagram illustrating a control content, a physical quantity, and an observation value determined by the prediction unit 4a.

In the example of FIG. 5, the control content determined by the prediction unit 4a is a work amount of the air conditioning appliance 7. The work amount of the air conditioning appliance 7 corresponds to an operation ratio of the air conditioning appliance 7.

In the example of FIG. 5, the observation values are a room temperature, an outside air temperature, a solar radiation amount, and the number of people in a room. Each of a thermal load and a ventilation amount is a physical quantity of the environment in which the air conditioning appliance 7 is disposed.

In the example of FIG. 5, the current time is 12:00, and a time after the current time is a future time.

### (1) First determination process example

It is assumed that one of past observation values is an observation value of a solar radiation amount to a room in which the air conditioning appliance is disposed, and that one of the past observation values is an observation value of an outside air temperature of the room in which the air conditioning appliance is disposed. In this case, a solar radiation amount sensor is used as a sensor that obtains the observation value of the solar radiation amount. As a sensor that obtains the observation value of the outside air temperature, a temperature sensor is used.

For example, the prediction unit 4a acquires an observation value of a solar radiation amount at the same time t_{bef0} as the current time t₀ (hereinafter, referred to as "first solar radiation amount observation value") and an observation value of a solar radiation amount at the same time t_{bef1} as a future time (for example, 12:30) which is a prediction time t₁ (hereinafter, referred to as" second solar radiation amount observation value") from among observation values of a solar radiation amount on a previous day, which are past observation values.

In addition, the prediction unit 4a acquires an observation value of an outside air temperature at the same time t_{bef0} as the current time t₀ (hereinafter, referred to as "outside air temperature previous day observation value") from among observation values of an outside air temperature on a previous day, which are past observation values.

Furthermore, the prediction unit 4a acquires an increase/decrease amount α_{bef1} [W] of a work amount of the air conditioning appliance 7 from the same time t_{bef0} to the same time t_{bef1} from among past control contents for the air conditioning appliance 7. Here, for convenience of description, it is assumed that the increase/decrease amount α_{bef1} is a positive value and the increase/decrease amount α_{bef1} is an increase amount.

In a first step of the process of determining the control content, the prediction unit 4a calculates an increase/decrease ratio γ [%] of the second solar radiation amount observation value to the first solar radiation amount observation value, and calculates a temperature difference ΔT [degrees] which is a difference between an observation value of the outside air temperature at the current time t₀ and the outside air temperature previous day observation value. Here, for convenience of description, it is assumed that γ > 0 and ΔT > 0 are satisfied.

Next, in a second step of the determination process, the prediction unit 4a predicts an increase/decrease amount β₁ [W] of the thermal load of the environment in which the air conditioning appliance 7 is disposed from the increase/decrease ratio γ and the temperature difference ΔT using artificial intelligence. In this case, β₁ > 0 is satisfied, and the increase/decrease amount β₁ indicates an increase amount. Since the process itself of predicting the increase/decrease amount β₁ [W] using artificial intelligence is a known technique, detailed description thereof is omitted.

Next, in a third step of the determination process, the prediction unit 4a predicts an increase amount α₁ [W] of the work amount of the air conditioning appliance 7 as a future control content for the air conditioning appliance 7 from the increase amount β₁ of the thermal load and the increase amount α_{bef1} of the work amount which is a past control content for the air conditioning appliance 7 using artificial intelligence. Since the process itself of predicting the increase amount α₁ [W] using artificial intelligence is a known technique, detailed description thereof is omitted. The third step here is a final step of determining the control content.

In the first determination process example, "increase in thermal load" is a direct determination factor of the control content, and each of "increase in solar radiation amount" and "increase in outside air temperature" is an indirect determination factor of the control content.

### (2) Second determination process example

Next, it is assumed that one of past observation values is an observation value of the number of people in a room in which the air conditioning appliance is disposed, and that one of the past observation values is an observation value of an outside air temperature of the room in which the air conditioning appliance is disposed. In this case, an image sensor or a human sensor is used as a sensor that obtains the observation value of the number of people in the room.

For example, the prediction unit 4a acquires an observation value of the number of people in the room at the same time t_{bef0} as the current time t₀ (hereinafter, referred to as "first number-of-people observation value") and an observation value of the number of people in the room at the same time t_{bef1} as a future time (for example, 12:30) which is a prediction time t₁ (hereinafter, referred to as "second number-of-people observation value") from among observation values of the number of people in the room on a previous day, which are past observation values.

In addition, the prediction unit 4a acquires an observation value of an outside air temperature at the same time t_{bef0} as the current time t₀ (hereinafter, referred to as "outside air temperature previous day observation value") from among observation values of an outside air temperature on a previous day, which are past observation values.

Furthermore, the prediction unit 4a acquires an increase/decrease amount α_{bef2} [W] of a work amount of the air conditioning appliance 7 from the same time t_{bef0} to the same time t_{bef1} from among past control contents for the air conditioning appliance 7. Here, for convenience of description, it is assumed that the increase/decrease amount α_{bef2} is a negative value and the increase/decrease amount α_{bef2} is a decrease amount.

In a first step of the determination process, the prediction unit 4a calculates the number of increase/decrease δ [people] of the second number-of-people observation value to the first number-of-people observation value, and calculates a temperature difference ΔT [degrees] which is a difference between an observation value of the outdoor temperature at the current time t₀ and the outside air temperature previous day observation value. Here, for convenience of description, it is assumed that δ < 0 and ΔT < 0 are satisfied.

Next, in a second step of the determination process, the prediction unit 4a predicts an increase/decrease amount β₂ [W] of the thermal load of the environment in which the air conditioning appliance 7 is disposed from the number of increase/decrease δ and the temperature difference ΔT using artificial intelligence. In this case, β₂ < 0 is satisfied, and the increase/decrease amount β₂ indicates a decrease amount.

Next, in a third step of the determination process, the prediction unit 4a predicts a decrease amount α₂ [W] of the work amount of the air conditioning appliance 7 as a future control content for the air conditioning appliance 7 from the decrease amount β₂ of the thermal load and the decrease amount α_{bef2} of the work amount which is a past control content for the air conditioning appliance 7 using artificial intelligence. Since the process itself of predicting the decrease amount α₂ [W] using artificial intelligence is a known technique, detailed description thereof is omitted. The third step here is a final step of determining the control content.

In the second determination process example, "decrease in thermal load" is a direct determination factor of the control content, and each of" decrease in the number of people in the room" and "decrease in outside air temperature" is an indirect determination factor of the control content.

### (3) Third determination process example

Next, it is assumed that one of past observation values is an observation value of the number of people in a room in which the air conditioning appliance is disposed.

For example, the prediction unit 4a acquires the first number-of-people observation value which is an observation value of the number of people in the room at the same time t_{bef0} as the current time t₀ and the second number-of-people observation value which is an observation value of the number of people in the room at the same time t_{bef1} as a future time which is a prediction time t₁ from among observation values of the number of people in the room on a previous day, which are past observation values.

In addition, the prediction unit 4a acquires an increase/decrease amount α_{bef3} [W] of a work amount of the air conditioning appliance 7 from the same time t_{bef0} to the same time t_{bef1} from among past control contents for the air conditioning appliance 7. Here, for convenience of description, it is assumed that the increase/decrease amount α_{bef3} is a positive value and the increase/decrease amount α_{bef3} is an increase amount.

In a first step of the determination process, the prediction unit 4a calculates the number of increases/decreases δ [people] of the second number-of-people observation value to the first number-of-people observation value. Here, for convenience of description, it is assumed that δ > 0 is satisfied.

Next, in a second step of the determination process, the prediction unit 4a predicts an increase/decrease amount β₃ [W] of the thermal load of the environment in which the air conditioning appliance 7 is disposed from the number of increase/decrease δ using artificial intelligence. In this case, β₃ > 0 is satisfied, and the increase/decrease amount β₃ indicates an increase amount. Since the process itself of predicting the increase/decrease amount β₃ [W] using artificial intelligence is a known technique, detailed description thereof is omitted.

Next, in a third step of the determination process, the prediction unit 4a predicts a control content of switching an operation state of the air conditioning appliance 7 from an air blower mode to a cooling mode as a future control content for the air conditioning appliance 7 from the increase amount β₃ of the thermal load and the increase/decrease amount α_{bef3} of the work amount which is a past control content for the air conditioning appliance 7 using artificial intelligence. Since the process itself of predicting the operation state using artificial intelligence is a known technique, detailed description thereof is omitted. The third step here is a final step of determining the control content.

In the third determination process example, "increase in thermal load" is a direct determination factor of the control content, and "increase in the number of people in the room" is an indirect determination factor of the control content.

The prediction unit 4a outputs control information indicating the determined control content to the appliance control processing unit 4b and the factor identification device 5.

The prediction unit 4a stores control information indicating the control content determined this time in the control content storing unit 3 in such a manner that the control content determined this time can be used as a past control content for the air conditioning appliance 7 when the process of determining a control content is executed next time.

In addition, the prediction unit 4a outputs, to the factor identification device 5, physical quantity information indicating a physical quantity used in a final step of determining a control content among a plurality of steps included in a process of determining the control content.

In the first determination process example described above, the "increase amount β₁ of the thermal load" is the physical quantity used in the final step, and in the second determination process example, the " decrease amount β₂ of the thermal load" is the physical quantity used in the final step.

In the third determination process example, the "increase amount β₃ of the thermal load" is the physical quantity used in the final step.

When receiving control information from the prediction unit 4a, the appliance control processing unit 4b controls the air conditioning appliance 7 according to a control content indicated by the control information.

The information acquiring unit 11 of the factor identification device 5 acquires control information and physical quantity information from the prediction unit 4a of the appliance control unit 4 (step ST1 in FIG. 4).

The information acquiring unit 11 outputs the control information and the physical quantity information to the determination factor identifying unit 12.

The determination factor identifying unit 12 acquires the control information and the physical quantity information from the information acquiring unit 11.

A plurality of decision trees in which a plurality of determination factors for a control content is hierarchically indicated is stored in an internal memory of the determination factor identifying unit 12.

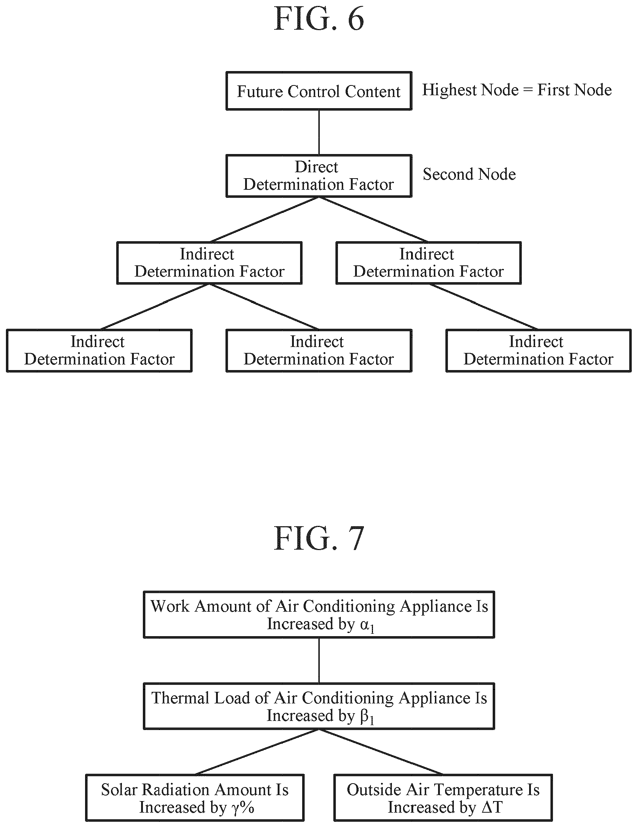

FIG. 6 is an explanatory diagram illustrating an example of the decision tree.

In the decision tree illustrated in FIG. 6, a first node as a highest node indicates a future control content for the air conditioning appliance 7. A second node which is a node in a layer immediately below the highest node indicates a direct determination factor of the control content.

Nodes in a layer immediately below the second node and in a layer therebelow indicate indirect determination factors of the control content.

Each of FIGS. 7, 8, and 9 is an explanatory diagram illustrating an example of a decision tree including a specific example of a future control content, a specific example of a direct determination factor, and a specific example of an indirect determination factor.

In the decision tree illustrated in FIG. 7, the future control content is "the work amount of the air conditioning appliance 7 is increased by α₁", and the direct determination factor of the control content is "the thermal load is increased by β₁". The indirect determination factor of the control content is each of "the solar radiation amount is increased by γ%" and "the outside air temperature is increased by ΔT".

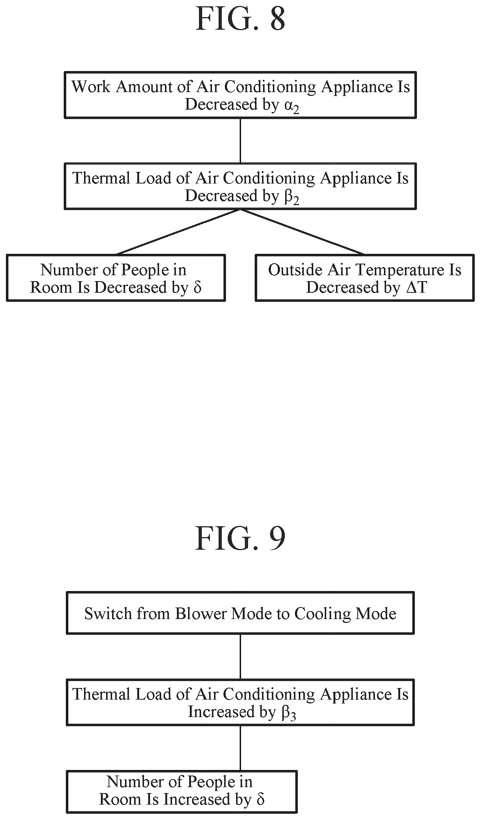

In the decision tree illustrated in FIG. 8, the future control content is "the work amount of the air conditioning appliance 7 is decreased by α₂", and the direct determination factor of the control content is "the thermal load is decreased by β₂". The indirect determination factor of the control content is each of "the number of people in the room is decreased by δ" and "the outside air temperature is decreased by ΔT".

In the decision tree illustrated in FIG. 9, the future control content is "an operation state of the air conditioning appliance 7 is switched from an air blower mode to a cooling mode", and the direct determination factor of the control content is "the thermal load is increased by β₃". An indirect determination factor of the control content is "the number of people in the room is increased by δ".

Here, an example is illustrated in which a plurality of decision trees is stored in the internal memory of the determination factor identifying unit 12. However, this is merely an example, and the plurality of decision trees may be provided from the outside of the factor identification device 5.

The determination factor identifying unit 12 selects, from among the plurality of decision trees, a decision tree including a first node indicating the control content indicated by the control information acquired by the information acquiring unit 11 and a second node indicating the determination factor corresponding to the physical quantity indicated by the physical quantity information acquired by the information acquiring unit 11.

For example, when the control content indicated by the control information is "the work amount of the air conditioning appliance 7 is increased by α₁" and the physical quantity indicated by the physical quantity information acquired by the information acquiring unit 11 is "increase amount β₁ of the thermal load", the determination factor identifying unit 12 selects the decision tree illustrated in FIG. 7.

For example, when the control content indicated by the control information is "the work amount of the air conditioning appliance 7 is decreased by α₂" and the physical quantity indicated by the physical quantity information acquired by the information acquiring unit 11 is "decrease amount β₂ of the thermal load", the determination factor identifying unit 12 selects the decision tree illustrated in FIG. 8.

For example, when the control content indicated by the control information is "an operation state of the air conditioning appliance 7 is switched from an air blower mode to a cooling mode" and the physical quantity indicated by the physical quantity information acquired by the information acquiring unit 11 is "increase amount β₃ of the thermal load", the determination factor identifying unit 12 selects the decision tree illustrated in FIG. 9.

The determination factor identifying unit 12 acquires a determination factor indicated in the second node included in the selected decision tree as a direct determination factor of the control content determined by the appliance control unit 4 (step ST2 in FIG. 4).

The determination factor identifying unit 12 outputs determination factor information indicating the acquired determination factor to the display data generating unit 13.

The display data generating unit 13 acquires the determination factor information from the determination factor identifying unit 12.

The display data generating unit 13 generates display data for displaying the determination factor indicated by the determination factor information (step ST3 in FIG. 4). Since the process itself of generating the display data is a known technique, detailed description thereof is omitted.

The display data generating unit 13 outputs the display data to the display device 6.

The display device 6 acquires the display data from the display data generating unit 13 of the factor identification device 5.

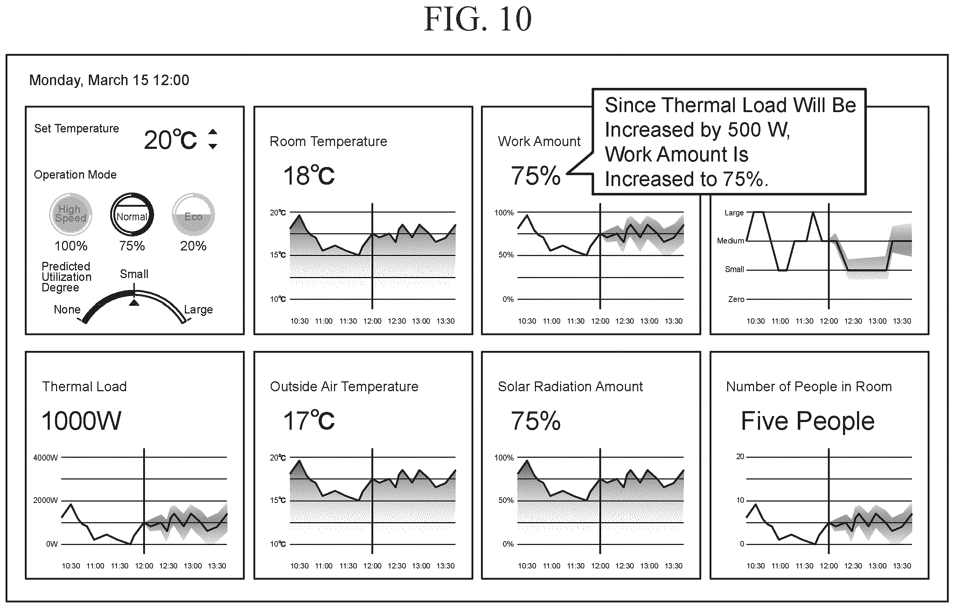

As illustrated in FIG. 10, the display device 6 displays a direct determination factor of the control content on the display according to the display data.

In the appliance control device illustrated in FIG. 1, a user who knows that a direct determination factor of the control content is displayed on the display can immediately grasp the direct determination factor of the control content by looking at a content displayed on the display.

FIG. 10 is an explanatory diagram illustrating an example of the direct determination factor of the control content.

FIG. 10 illustrates an example when the future control content is "the work amount of the air conditioning appliance 7 is increased by α₁", and the direct determination factor of the control content is "the thermal load is increased by β₁". In the example of FIG. 10, an increase ratio of the increase amount α₁ of the work amount is 75 [%], and the increase amount β₁ of the thermal load is 500 [W].

Therefore, in FIG. 10, as a message including "the thermal load is increased by 500 W" which is a direct determination factor of the control content, a message "Since the thermal load is increased by 500 W, the work amount is increased to 75%." is popped up at a position indicating the control content of the air conditioning appliance 7. However, this is merely an example, and for example, only a direct determination factor may be displayed on the display.

In the first embodiment, the factor identification device 5 includes: the information acquiring unit 11 that acquires, from the appliance control unit 4 that determines a future control content with respect to an appliance to be controlled, physical quantity information indicating a physical quantity of an environment in which the appliance to be controlled is disposed, the physical quantity information being used in a final step of determining the control content among a plurality of steps included in a process of determining the control content; the determination factor identifying unit 12 that identifies a determination factor of the control content determined by the appliance control unit 4 on the basis of the physical quantity indicated by the physical quantity information acquired by the information acquiring unit 11; and the display data generating unit 13 that generates display data for displaying the determination factor identified by the determination factor identifying unit 12, and outputs the display data. Therefore, the factor identification device 5 can present a direct determination factor of the control content to a user.

In the factor identification device 5 illustrated in FIG. 1, the determination factor identifying unit 12 selects, from among a plurality of decision trees, a decision tree including a first node indicating the control content indicated by the control information acquired by the information acquiring unit 11 and a second node indicating the determination factor corresponding to the physical quantity indicated by the physical quantity information acquired by the information acquiring unit 11. Then, the determination factor identifying unit 12 identifies a determination factor indicated in the second node included in the selected decision tree as a direct determination factor of the control content determined by the appliance control unit 4.

However, this is merely an example, and the determination factor identifying unit 12 selects, from among a plurality of decision trees, a decision tree including a second node indicating the determination factor corresponding to the physical quantity indicated by the physical quantity information acquired by the information acquiring unit 11, without using the control information acquired by the information acquiring unit 11. Then, the determination factor identifying unit 12 may identify a determination factor indicated in the second node included in the selected decision tree as a direct determination factor of the control content determined by the appliance control unit 4.

### Second Embodiment.

In a second embodiment, a factor identification device 5 including a request accepting unit 14 that accepts a request for identifying an indirect determination factor of a control content determined by an appliance control unit 4 will be described.

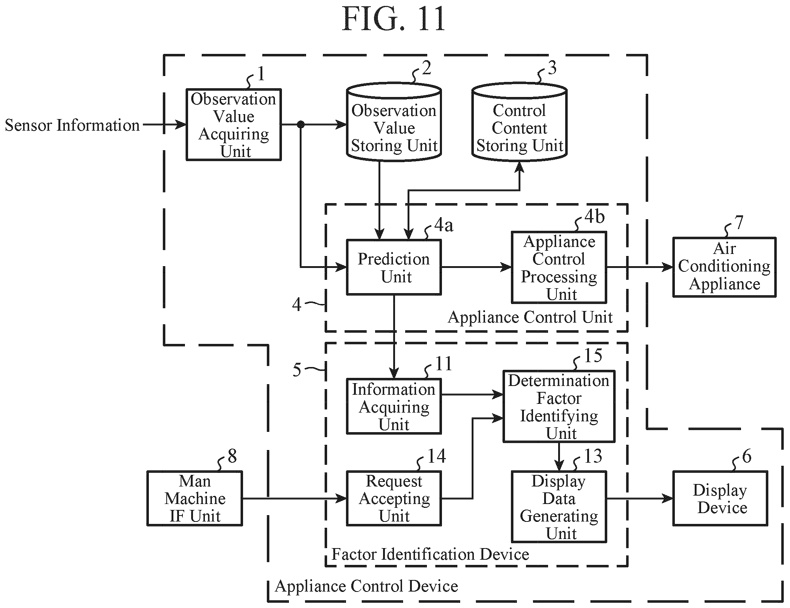

FIG. 11 is a configuration diagram illustrating an appliance control device including the factor identification device 5 according to the second embodiment. In FIG. 11, the same reference numerals as in FIG. 1 indicate the same or corresponding parts, and therefore description thereof is omitted.

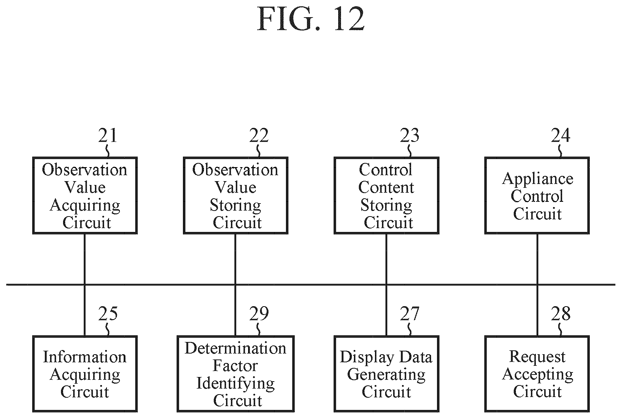

FIG. 12 is a hardware configuration diagram illustrating hardware of the appliance control device according to the second embodiment. In FIG. 12, the same reference numerals as in FIG. 2 indicate the same or corresponding parts, and therefore description thereof is omitted.

A man machine interface unit (hereinafter, referred to as "man machine IF unit") 8 is implemented by, for example, a mouse, a keyboard, or a touch panel.

The man machine IF unit 8 accepts a user's operation and outputs operation information indicating a content of the user's operation to the factor identification device 5.

In the appliance control device illustrated in FIG. 11, the man machine IF unit 8 is disposed outside the appliance control device. However, this is merely an example, and the man machine IF unit 8 may be disposed inside the appliance control device.

The factor identification device 5 illustrated in FIG. 11 includes an information acquiring unit 11, the request accepting unit 14, a determination factor identifying unit 15, and a display data generating unit 13.

The request accepting unit 14 is implemented by, for example, a request accepting circuit 28 illustrated in FIG. 12.

The request accepting unit 14 acquires operation information indicating a content of a user's operation from the man machine IF unit 8.

When the operation content indicated by the operation information is a request for identifying an indirect determination factor of a control content, the request accepting unit 14 accepts the request for identifying an indirect determination factor.

The determination factor identifying unit 15 is implemented by, for example, a determination factor identifying circuit 29 illustrated in FIG. 12.

Similarly to the determination factor identifying unit 12 illustrated in FIG. 1, the determination factor identifying unit 15 identifies a direct determination factor of the control content.

When the request accepting unit 14 accepts the request for identifying an indirect determination factor, the determination factor identifying unit 15 acquires, as the indirect determination factor of the control content, a determination factor indicated in a node in a layer lower than the second node included in the selected decision tree.

The determination factor identifying unit 15 outputs information indicating the acquired determination factor to the display data generating unit 13.

In FIG. 11, it is assumed that each of the observation value acquiring unit 1, the observation value storing unit 2, the control content storing unit 3, the appliance control unit 4, the information acquiring unit 11, the request accepting unit 14, the determination factor identifying unit 15, and the display data generating unit 13, which are constituent elements of the appliance control device, is implemented by dedicated hardware as illustrated in FIG. 12. That is, it is assumed that the appliance control device is implemented by the observation value acquiring circuit 21, the observation value storing circuit 22, the control content storing circuit 23, the appliance control circuit 24, the information acquiring circuit 25, the request accepting circuit 28, the determination factor identifying circuit 29, and the display data generating circuit 27.

To each of the observation value acquiring circuit 21, the appliance control circuit 24, the information acquiring circuit 25, the request accepting circuit 28, the determination factor identifying circuit 29, and the display data generating circuit 27, for example, a single circuit, a composite circuit, a programmed processor, a parallel programmed processor, an ASIC, a FPGA, or a combination thereof corresponds.

The constituent elements of the appliance control device are not limited to those implemented by dedicated hardware, and the appliance control device may be implemented by software, firmware, or a combination of software and firmware.

In a case where the appliance control device is implemented by software, firmware, or the like, the observation value storing unit 2 and the control content storing unit 3 are constituted on the memory 41 illustrated in FIG. 3. A program for causing a computer to execute a processing procedure performed in each of the observation value acquiring unit 1, the appliance control unit 4, the information acquiring unit 11, the request accepting unit 14, the determination factor identifying unit 15, and the display data generating unit 13 is stored in the memory 41. Then, the processor 42 illustrated in FIG. 3 executes the program stored in the memory 41.

FIG. 12 illustrates an example in which each of the constituent elements of the appliance control device is implemented by dedicated hardware, and FIG. 3 illustrates an example in which the appliance control device is implemented by software, firmware, or the like. However, this is merely an example, and some of the constituent elements of the appliance control device may be implemented by dedicated hardware, and the remaining constituent elements may be implemented by software, firmware, or the like.

Next, an operation of the appliance control device illustrated in FIG. 11 will be described. Since the appliance control device illustrated in FIG. 11 is similar to the appliance control device illustrated in FIG. 1 except for the man machine IF unit 8, the request accepting unit 14, and the determination factor identifying unit 15, operations of the man machine IF unit 8, the request accepting unit 14, and the determination factor identifying unit 15 will be mainly described here.

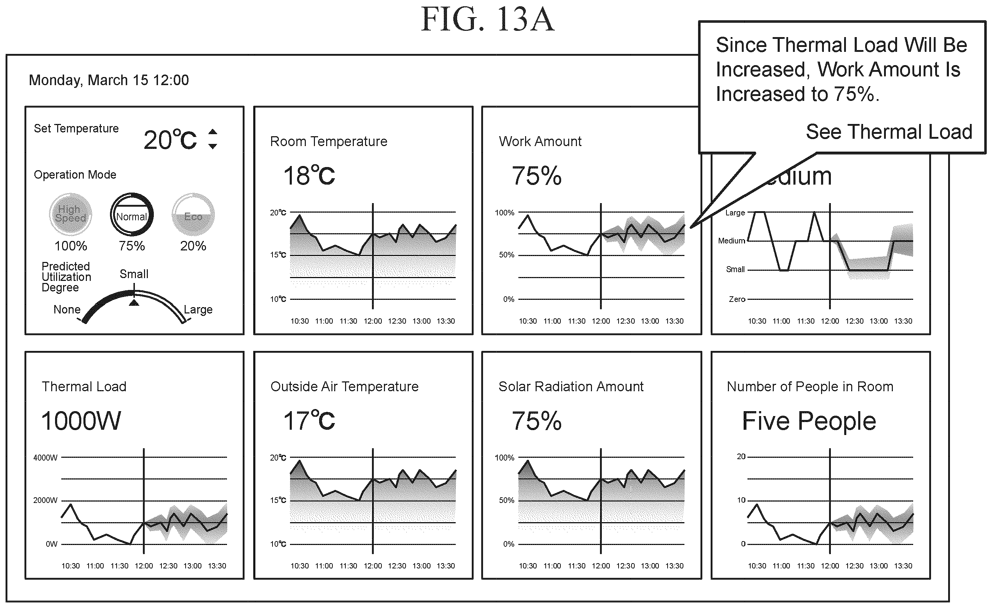

After a pop-up message as illustrated in FIG. 13A is displayed on a display of a display device 6 as a direct determination factor of the control content, if a user wants to check an indirect determination factor of the control content, the user performs an operation of requesting identification of the indirect determination factor of the control content using the man machine IF unit 8.

In the example of FIG. 13A, the operation of requesting identification of the indirect determination factor of the control content is an operation of clicking "See thermal load" in the pop-up message.

FIG. 13A is an explanatory diagram illustrating an example of the direct determination factor of the control content.

The man machine IF unit 8 accepts a user's identifying request operation and outputs operation information indicating that the operation content is a request for identifying an indirect determination factor of a control content to the factor identification device 5.

The request accepting unit 14 of the factor identification device 5 acquires the operation information from the man machine IF unit 8.

When the operation content indicated by the operation information is a request for identifying an indirect determination factor of a control content, the request accepting unit 14 accepts the request for identifying an indirect determination factor.

The request accepting unit 14 notifies the determination factor identifying unit 15 that the request for identifying an indirect determination factor has been accepted.

Similarly to the determination factor identifying unit 12 illustrated in FIG. 1, the determination factor identifying unit 15 selects, from among a plurality of decision trees, a decision tree including a first node indicating the control content indicated by the control information acquired by the information acquiring unit 11 and a second node indicating the determination factor corresponding to the physical quantity indicated by the physical quantity information acquired by the information acquiring unit 11.

When the request accepting unit 14 accepts the request for identifying an indirect determination factor, the determination factor identifying unit 15 acquires, as the indirect determination factor of the control content, a determination factor indicated in a node in a layer lower than the second node included in the selected decision tree.

For example, when a future control content is "the work amount of an air conditioning appliance 7 is increased by α₁", the determination factor identifying unit 15 acquires, as an indirect determination factor of the control content, "the solar radiation amount is increased by γ%" and "the outside air temperature is increased by ΔT" from the decision tree illustrated in FIG. 7.

For example, when the future control content is "the work amount of the air conditioning appliance 7 is decreased by α₂", the determination factor identifying unit 15 acquires, as an indirect determination factor of the control content, "the number of people in the room is decreased by δ" and "the outside air temperature is decreased by ΔT" from the decision tree illustrated in FIG. 8.

For example, when the future control content is "an operation state of the air conditioning appliance 7 is switched from an air blower mode to a cooling mode", the determination factor identifying unit 15 acquires, as an indirect determination factor of the control content, "the number of people in the room is increased by δ" from the decision tree illustrated in FIG. 9.

The determination factor identifying unit 15 outputs determination factor information indicating the indirect determination factor of the control content to the display data generating unit 13.

The display data generating unit 13 acquires the determination factor information indicating the indirect determination factor of the control content from the determination factor identifying unit 15.

The display data generating unit 13 generates display data for displaying the indirect determination factor of the control content.

The display data generating unit 13 outputs the display data to the display device 6.

The display device 6 acquires the display data from the display data generating unit 13 of the factor identification device 5.

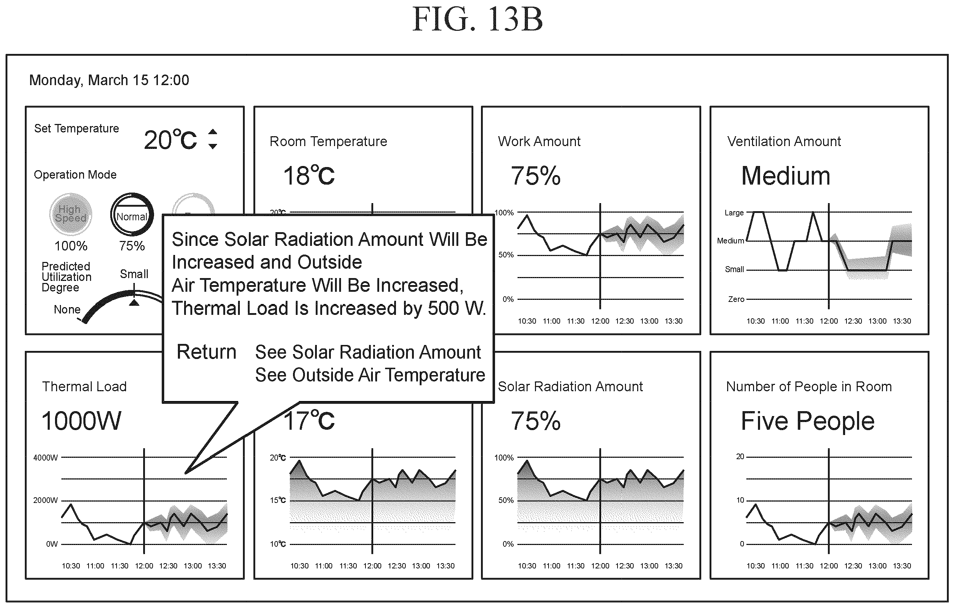

As illustrated in FIG. 13B, the display device 6 displays an indirect determination factor of the control content on a display according to the display data.

FIG. 13B is an explanatory diagram illustrating an example of the indirect determination factor of the control content.

FIG. 13B illustrates an example when the future control content is "the work amount of the air conditioning appliance 7 is increased by α₁", and the indirect determination factor of the control content is each of "increase in solar radiation amount" and "increase in outside air temperature".

Therefore, in FIG. 13B, as a message including "increase in solar radiation amount" and "increase in outside air temperature" which are indirect determination factors of the control content, a message "Since the solar radiation amount is increased and the outside air temperature is increased, the thermal load is increased by 500 W." is popped up at a position indicating a direct determination factor of the control content. However, this is merely an example, and for example, only an indirect determination factor may be displayed on the display.

After a pop-up message as illustrated in FIG. 13B is displayed on the display of the display device 6 as an indirect determination factor of the control content, if a user wants to confirm details of the indirect determination factor, the user performs an operation of requesting disclosure of details of the indirect determination factor using the man machine IF unit 8.

In the example of FIG. 13B, the operation of requesting disclosure of details of the indirect determination factor is each of an operation of clicking "See solar radiation amount" in the pop-up message and an operation of clicking "See outside air temperature" in the pop-up message.

The man machine IF unit 8 accepts the operation of requesting disclosure of details of the indirect determination factor and outputs operation information indicating that the operation content is the request for disclosing details of the indirect determination factor to the factor identification device 5.

The request accepting unit 14 of the factor identification device 5 acquires the operation information from the man machine IF unit 8.

When the operation content indicated by the operation information is a request for disclosing details of the indirect determination factor, the request accepting unit 14 accepts the request for disclosing details of the indirect determination factor.

The request accepting unit 14 notifies the determination factor identifying unit 15 that the request for disclosing details of the indirect determination factor has been accepted.

When the request accepting unit 14 accepts the request for disclosing details of the indirect determination factor, the determination factor identifying unit 15 acquires, from the information acquiring unit 11, data indicating a temporal change in solar radiation amount, which is an indirect determination factor, or data indicating a temporal change in outside air temperature, which is an indirect determination factor.

That is, the determination factor identifying unit 15 acquires data indicating a temporal change in solar radiation amount when a user performs an operation of clicking "See solar radiation amount" in the pop-up message, and acquires data indicating a temporal change in outside air temperature when the user performs an operation of clicking "See outside air temperature" in the pop-up message.

The determination factor identifying unit 15 outputs, to the display data generating unit 13, determination factor information indicating an indirect determination factor of the control content, and data indicating a temporal change in solar radiation amount or data indicating a temporal change in outside air temperature.

The display data generating unit 13 acquires, from the determination factor identifying unit 15, determination factor information indicating an indirect determination factor of the control content, and data indicating a temporal change in solar radiation amount or data indicating a temporal change in outside air temperature.

The display data generating unit 13 generates display data for displaying an indirect determination factor of the control content and data indicating a temporal change in solar radiation amount or data indicating a temporal change in outside air temperature.

The display data generating unit 13 outputs the display data to the display device 6.

The display device 6 acquires the display data from the display data generating unit 13 of the factor identification device 5.

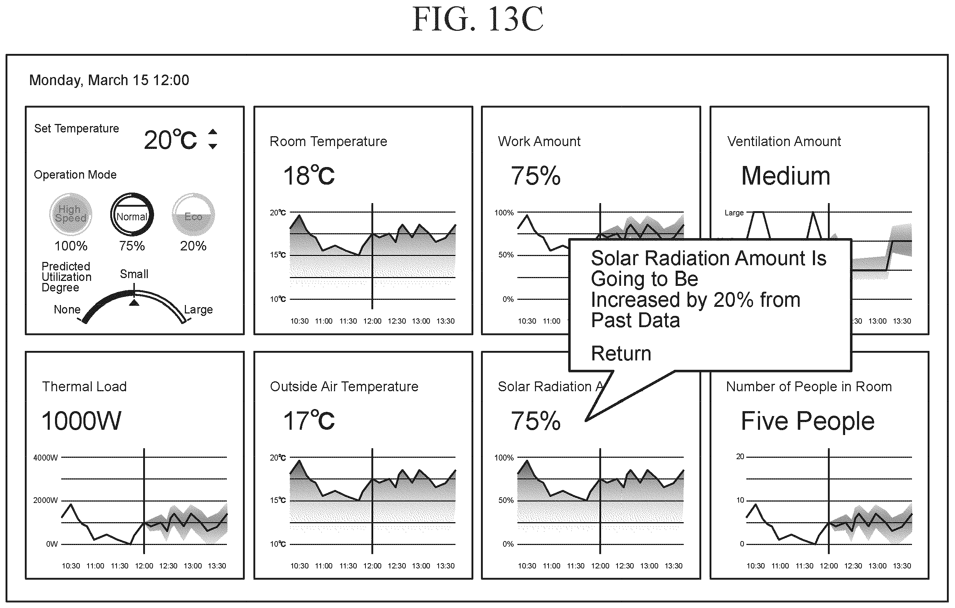

When a user performs an operation of clicking "See solar radiation amount" in the pop-up message, the display device 6 displays an indirect determination factor of the control content and a temporal change in solar radiation amount on the display according to the display data as illustrated in FIG. 13C.

FIG. 13C is an explanatory diagram illustrating an example of the indirect determination factor of the control content.

FIG. 13C illustrates an example when the indirect determination factor of the control content is "increase in solar radiation amount".

Therefore, in FIG. 13C, as a message including "The solar radiation amount is increased" which is an indirect determination factor of the control content, a message "The solar radiation amount is going to be increased by 20% from past data" is popped up at a position indicating the solar radiation amount which is an indirect determination factor of the control content. However, this is merely an example, and for example, only an indirect determination factor may be displayed on the display.

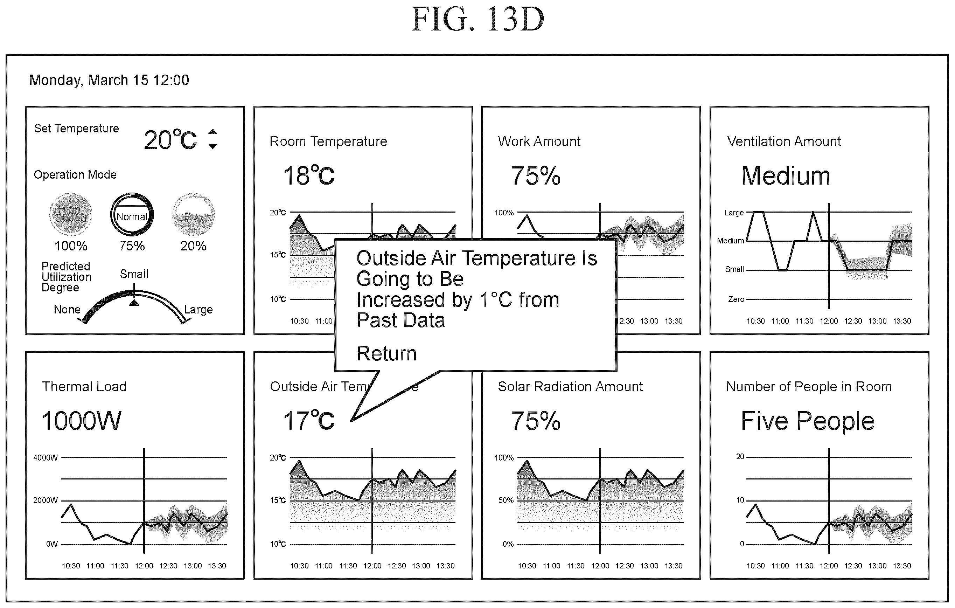

When a user performs an operation of clicking "See solar radiation amount" in the pop-up message, the display device 6 displays an indirect determination factor of the control content and a temporal change in outside air temperature on the display according to the display data as illustrated in FIG. 13D.

FIG. 13D is an explanatory diagram illustrating an example of the indirect determination factor of the control content.

FIG. 13D illustrates an example when the indirect determination factor of the control content is "increase in outside air temperature".

Therefore, in FIG. 13D, as a message including "increase in outside air temperature" which is an indirect determination factor of the control content, a message "The outside air temperature is going to be increased by 1°C from past data" is popped up at a position indicating the outside air temperature which is an indirect determination factor of the control content. However, this is merely an example, and for example, only an indirect determination factor may be displayed on the display.

The user can switch the display content of the display by performing the above operation using the man machine IF unit 8. That is, the user can check a hierarchical relationship among determination factors of the control content displayed on the display while switching the determination factors.

In the second embodiment, the factor identification device 5 illustrated in FIG. 11 is configured in such a manner that when the request accepting unit 14 accepts a request for identifying an indirect determination factor, the determination factor identifying unit 15 acquires, as the indirect determination factor of the control content, a determination factor indicated in a node in a layer lower than the second node included in the selected decision tree. Therefore, similarly to the factor identification device 5 illustrated in FIG. 1, the factor identification device 5 illustrated in FIG. 11 can present a direct determination factor of the control content to a user, and can also present an indirect determination factor of the control content to the user in response to a request of the user.

### Third embodiment.

In a third embodiment, a factor identification device 5 will be described in which a display data generating unit 16 generates display data by applying a determination factor identified by a determination factor identifying unit 15 to a sentence template including a determination factor.

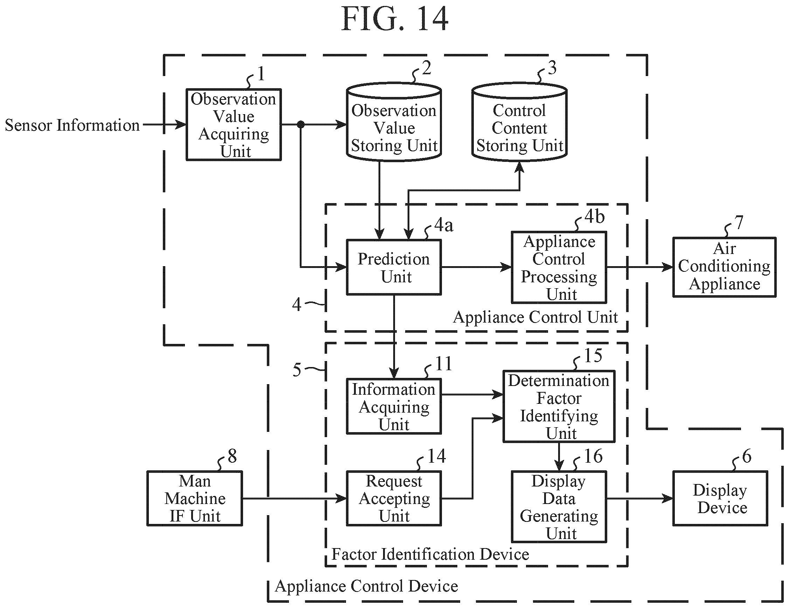

FIG. 14 is a configuration diagram illustrating an appliance control device including the factor identification device 5 according to the third embodiment. In FIG. 14, the same reference numerals as in FIGS. 1 and 11 indicate the same or corresponding parts, and therefore description thereof is omitted.

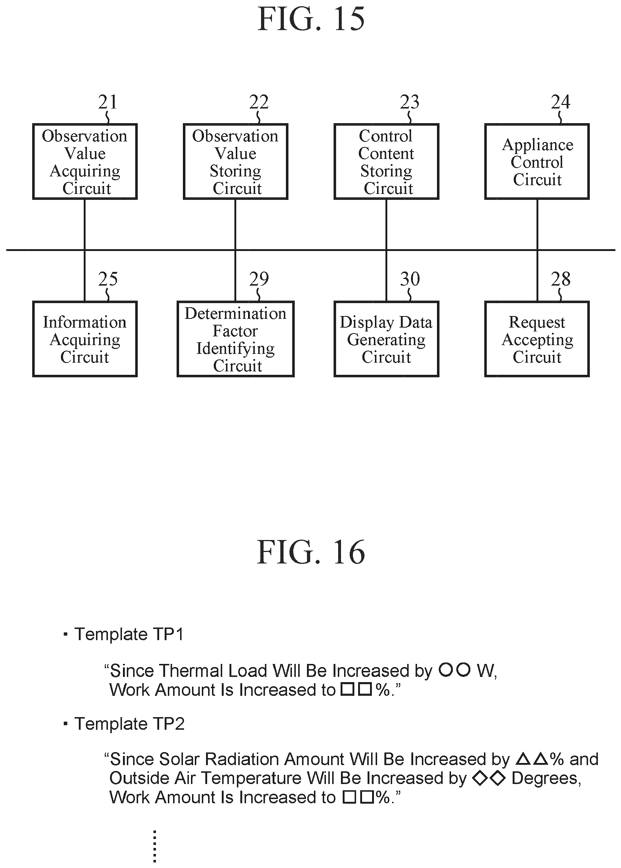

FIG. 15 is a hardware configuration diagram illustrating hardware of the appliance control device according to the third embodiment. In FIG. 15, the same reference numerals as in FIGS. 2 and 12 indicate the same or corresponding parts, and therefore description thereof is omitted.

The factor identification device 5 illustrated in FIG. 14 includes an information acquiring unit 11, a request accepting unit 14, the determination factor identifying unit 15, and the display data generating unit 16.

The display data generating unit 16 is implemented by, for example, a display data generating circuit 30 illustrated in FIG. 15.

A sentence template including a determination factor is stored in an internal memory of the display data generating unit 16. Here, the sentence template including a determination factor is stored in the internal memory of the display data generating unit 16. However, this is merely an example, and the template may be provided from the outside of the factor identification device 5.

The display data generating unit 16 generates display data for displaying a determination factor by applying a determination factor identified by the determination factor identifying unit 15 to a sentence template including a determination factor.

The display data generating unit 16 outputs the display data to a display device 6.

In the factor identification device 5 illustrated in FIG. 14, the display data generating unit 16 is applied to the factor identification device 5 illustrated in FIG. 11. However, this is merely an example, and the display data generating unit 16 may be applied to the factor identification device 5 illustrated in FIG. 1.

In FIG. 14, it is assumed that each of the observation value acquiring unit 1, the observation value storing unit 2, the control content storing unit 3, the appliance control unit 4, the information acquiring unit 11, the request accepting unit 14, the determination factor identifying unit 15, and the display data generating unit 16, which are constituent elements of the appliance control device, is implemented by dedicated hardware as illustrated in FIG. 15. That is, it is assumed that the appliance control device is implemented by an observation value acquiring circuit 21, an observation value storing circuit 22, a control content storing circuit 23, an appliance control circuit 24, an information acquiring circuit 25, a request accepting circuit 28, a determination factor identifying circuit 29, and a display data generating circuit 30.

To each of the observation value acquiring circuit 21, the appliance control circuit 24, the information acquiring circuit 25, the request accepting circuit 28, the determination factor identifying circuit 29, and the display data generating circuit 30, for example, a single circuit, a composite circuit, a programmed processor, a parallel programmed processor, an ASIC, a FPGA, or a combination thereof corresponds.

The constituent elements of the appliance control device are not limited to those implemented by dedicated hardware, and the appliance control device may be implemented by software, firmware, or a combination of software and firmware.

In a case where the appliance control device is implemented by software, firmware, or the like, the observation value storing unit 2 and the control content storing unit 3 are constituted on the memory 41 illustrated in FIG. 3. A program for causing the computer to execute a processing procedure performed in each of the observation value acquiring unit 1, the appliance control unit 4, the information acquiring unit 11, the request accepting unit 14, the determination factor identifying unit 15, and the display data generating unit 16 is stored in the memory 41. Then, the processor 42 illustrated in FIG. 3 executes the program stored in the memory 41.

FIG. 15 illustrates an example in which each of the constituent elements of the appliance control device is implemented by dedicated hardware, and FIG. 3 illustrates an example in which the appliance control device is implemented by software, firmware, or the like. However, this is merely an example, and some of the constituent elements of the appliance control device may be implemented by dedicated hardware, and the remaining constituent elements may be implemented by software, firmware, or the like.

Next, an operation of the appliance control device illustrated in FIG. 14 will be described. Since the units other than the display data generating unit 16 are similar to those of the appliance control device illustrated in FIG. 11, only an operation of the display data generating unit 16 will be described here.

As illustrated in FIG. 16, a plurality of sentence templates including a direct determination factor of a control content and a plurality of sentence templates including an indirect determination factor of the control content are stored in the internal memory of the display data generating unit 16.

FIG. 16 is an explanatory diagram illustrating an example of the template.

For example, as a sentence template including a direct determination factor, a template "Since the thermal load is increased by ∘∘ W, the work amount is increased to □□%." (hereinafter, referred to as "template TP1") is stored in the internal memory of the display data generating unit 16.

For example, as a sentence template including an indirect determination factor, a template "Since the solar radiation amount is increased by △△ % and the outsi de air temperature is increased by ◇◇ degrees, the work amount is increased to □□% ." (hereinafter referred to as "template TP2") is stored in the internal memory of the display data generating unit 16.

The display data generating unit 16 acquires determination factor information indicating a determination factor from the determination factor identifying unit 15.

The display data generating unit 16 acquires a sentence template including the determination factor indicated by the determination factor information from among a plurality of templates stored in the internal memory.

The display data generating unit 16 generates display data for displaying a determination factor by applying a determination factor identified by the determination factor identifying unit 15 to the acquired template.

For example, when a future control content is "the work amount of an air conditioning appliance 7 is increased by α₁" and a direct determination factor of a control content is "the thermal load is increased by β₁", the display data generating unit 16 applies "β₁" to "∘∘" of the template TP1 and applies "α₁" to "□□" of the template TP1.

Then, the display data generating unit 16 generates display data for displaying the message indicated by the template TP1 after the application is completed.

For example, when the future control content is "the work amount of the air conditioning appliance 7 is increased by α₁" and an indirect determination factors of the control content is each of "the solar radiation amount is increased by γ%" and "the outside air temperature is increased by ΔT", the display data generating unit 16 applies "γ" to "△△ " of the template TP2, applies " ΔT" to "◇◇" of the template TP2, and applies "α₁" to "□□" of the template TP2.

Then, the display data generating unit 16 generates display data for displaying the message indicated by the template TP2 after the application is completed.

The display data generating unit 16 outputs the display data to a display device 6.

In the third embodiment, the factor identification device 5 illustrated in FIG. 14 is configured in such a manner that the display data generating unit 16 generates display data by applying a determination factor identified by the determination factor identifying unit 15 to a sentence template including a determination factor. Therefore, the factor identification device 5 illustrated in FIG. 14 can create a sentence indicating a determination factor that can be grasped by a user.

### Fourth embodiment.

In a fourth embodiment, a factor identification device 5 including a graph generating unit 18 that generates a graph indicating a temporal change in physical quantity indicated by physical quantity information acquired by an information acquiring unit 17 will be described.

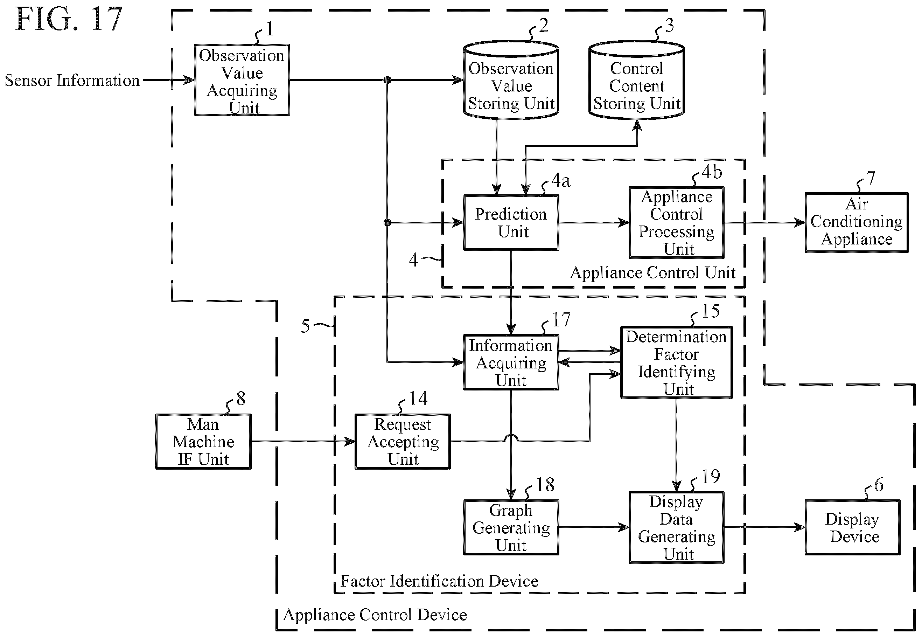

FIG. 17 is a configuration diagram illustrating an appliance control device including the factor identification device 5 according to the fourth embodiment. In FIG. 17, the same reference numerals as in FIGS. 1, 11, and 14 indicate the same or corresponding parts, and therefore description thereof is omitted.

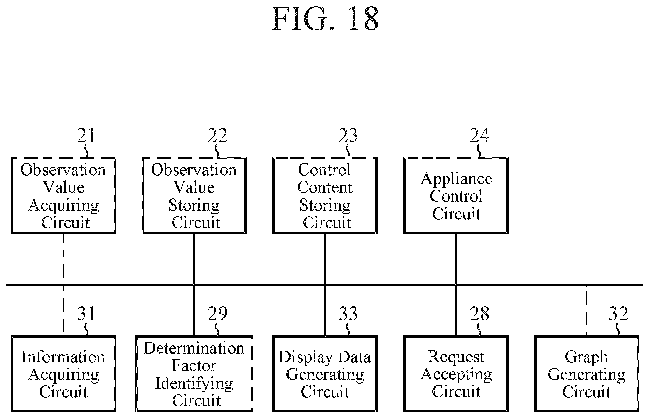

FIG. 18 is a hardware configuration diagram illustrating hardware of the appliance control device according to the fourth embodiment. In FIG. 18, the same reference numerals as in FIGS. 2, 12, and 15 indicate the same or corresponding parts, and therefore description thereof is omitted.

The factor identification device 5 illustrated in FIG. 17 includes an information acquiring unit 17, a request accepting unit 14, a determination factor identifying unit 15, the graph generating unit 18, and a display data generating unit 19.

The information acquiring unit 17 is implemented by, for example, an information acquiring circuit 31 illustrated in FIG. 18.

Similarly to the information acquiring unit 11 illustrated in FIG. 1, the information acquiring unit 17 acquires control information and physical quantity information from a prediction unit 4a of an appliance control unit 4.

When the determination factor identifying unit 15 identifies an indirect determination factor of a control content, the information acquiring unit 17 acquires an observation value related to the indirect determination factor from the observation value acquiring unit 1.

The information acquiring unit 17 outputs the control information and the physical quantity information to the determination factor identifying unit 15, and outputs the physical quantity information and the observation value to the graph generating unit 18.

The graph generating unit 18 is implemented by, for example, a graph generating circuit 32 illustrated in FIG. 18.

The graph generating unit 18 generates a graph indicating a temporal change in physical quantity indicated by physical quantity information acquired by the information acquiring unit 17.

In addition, the graph generating unit 18 generates a graph indicating a temporal change in observation value output from the information acquiring unit 17.

The graph generating unit 18 outputs the generated graph to the display data generating unit 19.

The display data generating unit 19 is implemented by, for example, a display data generating circuit 33 illustrated in FIG. 18.

The display data generating unit 19 generates display data for displaying the determination factor identified by the determination factor identifying unit 15 and the graph generated by the graph generating unit 18.

The display data generating unit 19 outputs the display data to the display device 6.

In the factor identification device 5 illustrated in FIG. 17, the information acquiring unit 17, the graph generating unit 18, and the display data generating unit 19 are applied to the factor identification device 5 illustrated in FIG. 11. However, this is merely an example, and the information acquiring unit 17, the graph generating unit 18, and the display data generating unit 19 may be applied to the factor identification device 5 illustrated in FIG. 1 or 14.

In FIG. 17, it is assumed that each of the observation value acquiring unit 1, the observation value storing unit 2, the control content storing unit 3, the appliance control unit 4, the information acquiring unit 17, the request accepting unit 14, the determination factor identifying unit 15, the graph generating unit 18, and the display data generating unit 19, which are constituent elements of the appliance control device, is implemented by dedicated hardware as illustrated in FIG. 18. That is, it is assumed that the appliance control device is implemented by an observation value acquiring circuit 21, an observation value storing circuit 22, a control content storing circuit 23, an appliance control circuit 24, an information acquiring circuit 31, a request accepting circuit 28, a determination factor identifying circuit 29, the graph generating circuit 32, and a display data generating circuit 33.

To each of the observation value acquiring circuit 21, the appliance control circuit 24, the information acquiring circuit 31, the request accepting circuit 28, the determination factor identifying circuit 29, the graph generating circuit 32, and the display data generating circuit 33, for example, a single circuit, a composite circuit, a programmed processor, a parallel programmed processor, an ASIC, a FPGA, or a combination thereof corresponds.

The constituent elements of the appliance control device are not limited to those implemented by dedicated hardware, and the appliance control device may be implemented by software, firmware, or a combination of software and firmware.

In a case where the appliance control device is implemented by software, firmware, or the like, the observation value storing unit 2 and the control content storing unit 3 are constituted on the memory 41 illustrated in FIG. 3. A program for causing the computer to execute a processing procedure performed in each of the observation value acquiring unit 1, the appliance control unit 4, the information acquiring unit 17, the request accepting unit 14, the determination factor identifying unit 15, the graph generating unit 18, and the display data generating unit 19 is stored in the memory 41. Then, the processor 42 illustrated in FIG. 3 executes the program stored in the memory 41.

FIG. 18 illustrates an example in which each of the constituent elements of the appliance control device is implemented by dedicated hardware, and FIG. 3 illustrates an example in which the appliance control device is implemented by software, firmware, or the like. However, this is merely an example, and some of the constituent elements of the appliance control device may be implemented by dedicated hardware, and the remaining constituent elements may be implemented by software, firmware, or the like.

In the appliance control device illustrated in FIG. 1, as illustrated in FIG. 10, the display device 6 also displays graphs indicating a temporal change in physical quantity and a temporal change in an observation value on a display. Note that generation of graphs indicating a temporal change in physical quantity and a temporal change in an observation value is not mentioned.

The appliance control device illustrated in FIG. 17 includes the graph generating unit 18 that generates graphs indicating a temporal change in physical quantity and a temporal change in an observation value.

Next, an operation of the appliance control device illustrated in FIG. 17 will be described. Since the appliance control device illustrated in FIG. 17 is similar to the appliance control device illustrated in FIG. 11 except for the information acquiring unit 17, the graph generating unit 18, and the display data generating unit 19, only operations of the information acquiring unit 17, the graph generating unit 18, and the display data generating unit 19 will be described here.

The information acquiring unit 17 acquires control information and physical quantity information from the prediction unit 4a of the appliance control unit 4.

For example, when a control content indicated by the control information is "the work amount of the air conditioning appliance 7 is increased by α₁", the information acquiring unit 17 acquires "a thermal load of an environment in which the air conditioning appliance 7 is disposed" as the physical quantity.

In addition, when the determination factor identifying unit 15 identifies an indirect determination factor of the control content, the information acquiring unit 17 acquires an observation value related to the indirect determination factor from the observation value acquiring unit 1.

For example, when the indirect determination factor of the control content is each of "the solar radiation amount is increased by γ%" and "the outside air temperature is increased by ΔT", the information acquiring unit 17 acquires each of a solar radiation amount observation value and an outside air observation value as an observation value related to the indirect determination factor.

The information acquiring unit 17 outputs the control information and the physical quantity information to the determination factor identifying unit 15, and outputs the physical quantity information and the observation value to the graph generating unit 18.

The graph generating unit 18 repeatedly acquires physical quantity information from the information acquiring unit 17.

The graph generating unit 18 generates a graph indicating a temporal change in physical quantity indicated by the repeatedly acquired physical quantity information.

The graph generating unit 18 outputs the generated graph to the display data generating unit 19.

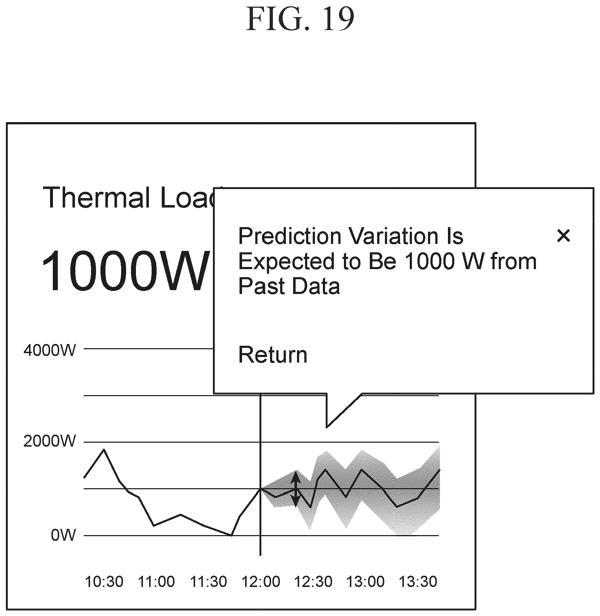

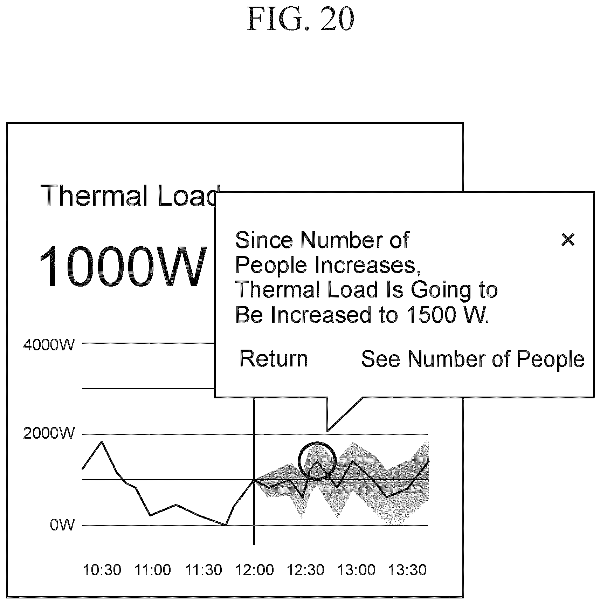

For example, when the physical quantity is a thermal load of the environment in which the air conditioning appliance 7 is disposed, the graph generating unit 18 generates a graph indicating a temporal change in thermal load as illustrated in FIGS. 19 and 20.

Each of FIGS. 19 and 20 is an explanatory diagram illustrating a graph indicating a temporal change in thermal load.

When an observation value related to the indirect determination factor is acquired by the information acquiring unit 17, the graph generating unit 18 repeatedly acquires an observation value from the information acquiring unit 17.

The graph generating unit 18 generates a graph indicating a temporal change in the repeatedly acquired observation value.

The graph generating unit 18 outputs the generated graph to the display data generating unit 19.

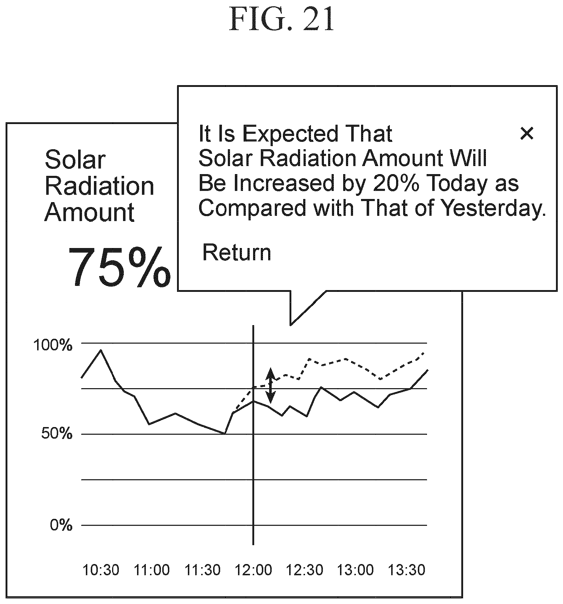

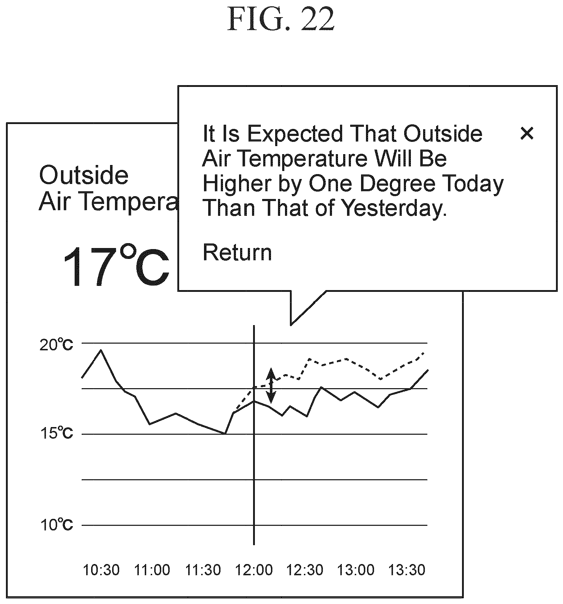

When the observation value related to the indirect determination factor is a solar radiation amount observation value, the graph generating unit 18 generates a graph indicating a temporal change in the solar radiation amount observation value as illustrated in FIG. 21. When the observation value related to the indirect determination factor is an outside air observation value, the graph generating unit 18 generates a graph indicating a temporal change in the outside air observation value as illustrated in FIG. 22.

FIG. 21 is an explanatory diagram illustrating a graph indicating a temporal change in the solar radiation amount observation value.

FIG. 22 is an explanatory diagram illustrating a graph indicating a temporal change in the outside air observation value.

The display data generating unit 19 acquires determination factor information indicating a determination factor from the determination factor identifying unit 15 and acquires a graph from the graph generating unit 18.

The display data generating unit 19 generates display data for displaying the determination factor indicated by the determination factor information and the graph as illustrated in FIGS. 19, 20, 21, and 22.

The display data generating unit 19 outputs the display data to the display device 6.

The graph illustrated in FIG. 19 indicates a temporal change in thermal load. In the graph illustrated in FIG. 19, a message "A prediction variation is expected to be 1000 W from past data." is displayed as a direct determination factor of a control content. The direct determination factor illustrated in FIG. 19 is merely an example, and as a message including "the thermal load is increased by 500 W" which is a direct determination factor of the control content, a message using an expression "Since the thermal load is increased by 500 W, the work amount is increased to 75%." may be displayed.

The graph illustrated in FIG. 20 also indicates a temporal change in thermal load. In the graph illustrated in FIG. 20, a message "Since the number of people increases, the thermal load is going to be increased to 1500 W" is displayed as a direct determination factor of the control content.

The graph illustrated in FIG. 21 indicates a temporal change in solar radiation amount observation value. In the graph illustrated in FIG. 21, a message "It is expected that the solar radiation amount will be increased by 20% today as compared with that of yesterday." is displayed as an indirect determination factor of the control content. The indirect determination factor illustrated in FIG. 21 is merely an example, and a message using an expression "The solar radiation amount is increased by 20% " may be displayed as the indirect determination factor.

The graph illustrated in FIG. 22 indicates a temporal change in outside air observation value. In the graph illustrated in FIG. 22, a message "It is expected that the outside air temperature will be higher by one degree today than that of yesterday." is displayed as an indirect determination factor of the control content. The indirect determination factor illustrated in FIG. 22 is merely an example, and a message using an expression "The outside air temperature is increased by one degree" may be displayed as the indirect determination factor.

In the fourth embodiment, the factor identification device 5 is configured in such a manner as to include the graph generating unit 18 that generates a graph indicating a temporal change in physical quantity indicated by physical quantity information acquired by the information acquiring unit 17, and in such a manner that the display data generating unit 19 generates display data for displaying a determination factor identified by the determination factor identifying unit 15 and the graph generated by the graph generating unit 18, and outputs the display data. Therefore, the factor identification device 5 can present a temporal change in physical quantity together with a direct determination factor of the control content to a user.

Note that the present disclosure can freely combine the embodiments to each other, modify any constituent element in each of the embodiments, or omit any constituent element in each of the embodiments.

### INDUSTRIAL APPLICABILITY

The present disclosure is suitable for a factor identification device, a factor identification method, and an appliance control device.

### REFERENCE SIGNS LIST

1: observation value acquiring unit, 2: observation value storing unit, 3: control content storing unit, 4: appliance control unit, 4a: prediction unit, 4b: appliance control processing unit, 5: factor identification device, 6: display device, 7: air conditioning appliance (appliance to be controlled), 8: man machine IF unit, 11, 17: information acquiring unit, 12, 15: determination factor identifying unit, 13, 16, 19: display data generating unit, 14: request accepting unit, 18: graph generating unit, 21: observation value acquiring circuit, 22: observation value storing circuit, 23: control content storing circuit, 24: appliance control circuit, 25, 31: information acquiring circuit, 26, 29: determination factor identifying circuit, 27, 30, 33: display data generating circuit, 28: request accepting circuit, 32: graph generating circuit, 41: memory, 42: processor

## Claims

1. An appliance control device including an appliance control unit and a factor identification device (5), wherein the factor identification device comprises:
an information acquiring unit (11) configured to acquire, from the appliance control unit (4) configured to determine a control content for future with respect to an appliance to be controlled, physical quantity information indicating a physical quantity of an environment in which the appliance to be controlled is disposed, wherein the appliance control unit is configured to use the physical quantity information in a final step of determining the control content among a plurality of steps included in a process of determining the control content;
a determination factor identifying unit (12, 15) configured to identify a determination factor of the control content determined by the appliance control unit on a basis of the physical quantity indicated by the physical quantity information acquired by the information acquiring unit; and
a display data generating unit (13, 16, 19) configured to generate display data for displaying the determination factor identified by the determination factor identifying unit and to output the display data, wherein
the information acquiring unit (11) is configured to:
acquire, from the appliance control unit (4), control information indicating the control content in addition to the physical quantity information; and
the determination factor identifying unit (12, 15) is configured to:
select, from among a plurality of decision trees, in which a plurality of determination factors for the control content is hierarchically indicated, a decision tree including a first node indicating the control content indicated by the control information acquired by the information acquiring unit (11) and a second node indicating a determination factor corresponding to the physical quantity indicated by the physical quantity information acquired by the information acquiring unit (11), the determination factor being a future increase/decrease amount of a thermal load, which is predicted by the appliance control unit using artificial intelligence, of the environment in which the appliance to be controlled is disposed, and acquire, as a determination factor of the control content determined by the appliance control unit (4), a determination factor indicated in the second node included in the selected decision tree.

2. The appliance control device according to claim 1, further comprising a request accepting unit (14) configured to accept a request for identifying an indirect determination factor of the control content determined by the appliance control unit, wherein the determination factor identifying unit (15) is configured to:
when the request accepting unit accepts a request for identifying an indirect determination factor, acquire, as the indirect determination factor of the control content, the determination factor indicated in a node in a layer lower than the second node included in the selected decision tree.

3. The appliance control device according to claim 1, wherein
the display data generating unit (16) is configured to:
generate the display data by applying the determination factor identified by the determination factor identifying unit to a sentence template to be filled by the determination factor.

4. The appliance control device according to claim 1, further comprising a graph generating unit (18) configured to generate a graph indicating a temporal change in the physical quantity indicated by the physical quantity information acquired by the information acquiring unit, wherein
the display data generating unit (19) is configured to:
generate the display data for displaying the determination factor identified by the determination factor identifying unit and the graph generated by the graph generating unit, and output the display data.

5. The appliance control device according to claim 4, wherein
the information acquiring unit (11) is configured to:
acquire, from the appliance control unit, an observation value related to the determination factor identified by the determination factor identifying unit among observation values of an environment in which the appliance to be controlled is disposed in addition to the physical quantity information, and
the graph generating unit (18) is configured to:
generate a graph indicating a temporal change in the observation value acquired by the information acquiring unit.

6. The appliance control device according to any preceding claim, further comprising:
a display device (6) configured to display the determination factor of the control content according to the display data generated by the display data generating unit.

7. The appliance control device according to claim 6, wherein
the appliance control unit (4) is configured to determine the control content for future for the appliance to be controlled from a current observation value of an environment in which the appliance to be controlled is disposed, a past observation value of the environment in which the appliance to be controlled is disposed, and a past control content for the appliance to be controlled.

8. A factor identification method comprising:
determining, by an appliance control unit, a control content for future with respect to an appliance to be controlled, wherein the appliance control unit uses physical quantity information indicating a physical quantity of an environment in which the appliance to be controlled is disposed in a final step of determining the control content among a plurality of steps included in a process of determining the control content;
acquiring, by an information acquiring unit (11), from the appliance control unit, the physical quantity information;
identifying, by a determination factor identifying unit (12, 15), a determination factor of the control content determined by the appliance control unit on a basis of the physical quantity indicated by the physical quantity information acquired by the information acquiring unit; and
generating, by a display data generating unit (13, 16, 19), display data for displaying the determination factor identified by the determination factor identifying unit, and outputting the display data by the display data generating unit, wherein
the acquiring further comprises:
acquiring, from the appliance control unit (4), control information indicating the control content in addition to acquiring the physical quantity information; and
the identifying comprises:
selecting, from among a plurality of decision trees, in which a plurality of determination factors for the control content is hierarchically indicated, a decision tree including a first node indicating the control content indicated by the control information acquired by the information acquiring unit (11) and a second node indicating a determination factor corresponding to the physical quantity indicated by the physical quantity information acquired by the information acquiring unit (11), the determination factor being a future increase/decrease amount of a thermal load, which is predicted by the appliance control unit using artificial intelligence, of the environment in which the appliance to be controlled is disposed, and acquiring, as a determination factor of the control content determined by the appliance control unit (4), a determination factor indicated in the second node included in the selected decision tree.

## Patentansprüche

1. Gerät-Steuereinrichtung, umfassend eine Gerät-Steuereinheit und eine Faktor-Identifizierungseinrichtung (5), wobei die Faktor-Identifizierungseinrichtung umfasst:
eine Informationserwerbungseinheit (11), die konfiguriert ist, von der Gerät-Steuereinheit (4), die konfiguriert ist, einen zukünftigen Steuerungsinhalt in Bezug auf ein zu steuerndes Gerät zu bestimmen, physikalische Größeninformationen zu erwerben, die eine physikalische Größe einer Umgebung angeben, in der sich das zu steuernde Gerät befindet, wobei die Gerät-Steuereinheit konfiguriert ist, die physikalischen Größeninformationen in einem finalen Schritt des Bestimmens des Steuerungsinhalts unter einer Vielzahl von Schritten zu nutzen, die in einem Prozess des Bestimmens des Steuerungsinhalts enthalten sind;
eine Bestimmungsfaktor-Identifizierungseinheit (12, 15), die konfiguriert ist, einen Bestimmungsfaktor des von der Gerät-Steuereinheit bestimmten Steuerungsinhalts auf der Grundlage der physikalischen Größe zu identifizieren, die durch die von der Informationserwerbungseinheit erworbenen physikalischen Größeninformationen angegeben wird; und
eine Anzeigedaten-Generierungseinheit (13, 16, 19), die konfiguriert ist, Anzeigedaten zur Darstellung des von der Bestimmungsfaktor-Identifizierungseinheit identifizierten Bestimmungsfaktors zu generieren und die Anzeigedaten auszugeben, wobei
die Informationserwerbungseinheit (11) konfiguriert ist, um:
von der Gerät-Steuereinheit (4) Steuerungsinformationen zu erwerben, die zusätzlich zu den physikalischen Größeninformationen den Steuerungsinhalt angeben; und
die Bestimmungsfaktor-Identifizierungseinheit (12, 15) konfiguriert ist, um:
aus einer Vielzahl von Entscheidungsbäumen, in denen eine Vielzahl von Bestimmungsfaktoren für den Steuerungsinhalt hierarchisch angegeben sind, einen Entscheidungsbaum auszuwählen, der einen ersten Knoten, der den Steuerungsinhalt angibt, der durch die von der Informationserwerbungseinheit (11) erworbenen Steuerungsinformationen angegeben wird, und einen zweiten Knoten enthält, der einen Bestimmungsfaktor angibt, welcher der physikalischen Größe entspricht, welche durch die von der Informationserwerbungseinheit (11) erworbenen physikalischen Größeninformationen angegeben ist, wobei der Bestimmungsfaktor ein zukünftiger Anstiegs/-Senkungsbetrag einer thermischen Last, welcher von der Gerät-Steuereinheit mithilfe künstlicher Intelligenz vorhergesagt wird, der Umgebung ist, in der sich das zu steuernde Gerät befindet, und als einen Bestimmungsfaktor für den von der Gerät-Steuereinheit (4) bestimmten Steuerungsinhalt einen Bestimmungsfaktor zu erwerben, der in dem zweiten Knoten angegeben ist, der in dem ausgewählten Entscheidungsbaum enthalten ist.

2. Gerät-Steuereinrichtung nach Anspruch 1, ferner umfassend eine Anforderungsakzeptierungseinheit (14), die konfiguriert ist, eine Anforderung zur Identifizierung eines indirekten Bestimmungsfaktors des von der Gerät-Steuereinheit bestimmten Steuerungsinhalts zu akzeptieren, wobei die Bestimmungsfaktor-Identifizierungseinheit (15) konfiguriert ist, um:
wenn die Anforderungsakzeptierungseinheit eine Anforderung zur Identifizierung eines indirekten Bestimmungsfaktors akzeptiert, als den indirekten Bestimmungsfaktor des Steuerungsinhalts den Bestimmungsfaktor zu erwerben, der in einem Knoten einer Ebene angegeben ist, die unterhalb des zweiten Knotens liegt, der in dem ausgewählten Entscheidungsbaum enthalten ist.

3. Gerät-Steuereinrichtung nach Anspruch 1, wobei die Anzeigedaten-Generierungseinheit (16) konfiguriert ist, um: die Anzeigedaten zu generieren, indem der von der Bestimmungsfaktor-Identifizierungseinheit identifizierte Bestimmungsfaktor auf ein Satz-Template angewendet wird, das durch den Bestimmungsfaktor auszufüllen ist.

4. Gerät-Steuereinrichtung nach Anspruch 1, ferner umfassend eine Graphen-Generierungseinheit (18), die konfiguriert ist, einen Graphen zu generieren, der eine zeitliche Veränderung der physikalischen Größe anzeigt, welche durch die von der Informationserwerbungseinheit erworbenen physikalischen Größeninformationen angegeben ist, wobei
die Anzeigedaten-Generierungseinheit (19) konfiguriert ist, um:
Anzeigedaten zum Anzeigen des von der Bestimmungsfaktor-Identifizierungseinheit identifizierten Bestimmungsfaktors und des von der Graphen-Generierungseinheit generierten Graphen zu generieren, und die Anzeigedaten auszugeben.

5. Gerät-Steuereinrichtung nach Anspruch 4, wobei
die Informationserwerbungseinheit (11) konfiguriert ist, um:
von der Gerät-Steuereinheit zusätzlich zu den physikalischen Größeninformationen einen Beobachtungswert zu erwerben, der sich auf den von der Bestimmungsfaktor-Identifizierungseinheit identifizierten Bestimmungsfaktor bezieht, aus Beobachtungswerten einer Umgebung, in der sich das zu steuernde Gerät befindet, und
wobei die Graphen-Generierungseinheit (18) konfiguriert ist, um:
einen Graphen zu generieren, der die zeitliche Veränderung des von der Informationserwerbungseinheit erworbenen Beobachtungswerts angibt.

6. Gerät-Steuereinrichtung nach einem der vorangehenden Ansprüche, ferner umfassend:
eine Anzeigeeinrichtung (6), die konfiguriert ist, den Bestimmungsfaktor des Steuerungsinhalts gemäß den von der Anzeigedaten-Generierungseinheit generierten Anzeigedaten anzuzeigen.

7. Gerät-Steuereinrichtung nach Anspruch 6, wobei
die Gerät-Steuereinheit (4) konfiguriert ist, den zukünftigen Steuerungsinhalt für das zu steuernde Gerät anhand eines aktuellen Beobachtungswerts einer Umgebung, in der sich das zu steuernde Gerät befindet, eines früheren Beobachtungswerts der Umgebung, in der sich das zu steuernde Gerät befindet, sowie eines früheren Steuerungsinhalts für das zu steuernde Gerät zu bestimmen.

8. Faktoridentifikationsverfahren, umfassend:
Bestimmen eines zukünftigen Steuerungsinhalts in Bezug auf ein zu steuerndes Gerät durch eine Gerät-Steuereinheit, wobei die Gerät-Steuereinheit in einem finalen Schritt des Bestimmens des Steuerungsinhalts unter einer Vielzahl von Schritten, welche in einem Prozess des Bestimmens des Steuerungsinhalts sind, physikalische Größeninformationen nutzt, die eine physikalische Größe einer Umgebung angeben, in der sich das zu steuernde Gerät befindet;
Erwerben der physikalischen Größeninformationen durch eine Informationserwerbungseinheit (11), von der Gerät-Steuereinheit;
Identifizieren, durch eine Bestimmungsfaktor-Identifizierungseinheit (12, 15), eines Bestimmungsfaktors des von der Gerät-Steuereinheit bestimmten Steuerungsinhalts auf der Grundlage der physikalischen Größe, die durch die von der Informationserwerbungseinheit erworbenen physikalischen Größeninformationen angegeben wird; und
Generieren, durch eine Anzeigedaten-Generierungseinheit (13, 16, 19), von Anzeigedaten zum Anzeigen des von der Bestimmungsfaktor-Identifizierungseinheit identifizierten Bestimmungsfaktors, und Ausgaben der Anzeigedaten durch die Anzeigedaten-Generierungseinheit, wobei
das Erwerben ferner umfasst:
Erwerben von Steuerungsinformationen von der Gerät-Steuereinheit (4), die zusätzlich zum Erwerben der physikalischen Größeninformationen den Steuerungsinhalt angeben; und
das Identifizieren umfasst:
Auswählen, aus einer Vielzahl von Entscheidungsbäumen, in denen eine Vielzahl von Bestimmungsfaktoren für den Steuerungsinhalt hierarchisch angegeben sind, eines Entscheidungsbaums, der einen ersten Knoten, der den Steuerungsinhalt angibt, der durch die von der Informationserwerbungseinheit (11) erworbenen Steuerungsinformationen angegeben ist, und einen zweiten Knoten enthält, der einen Bestimmungsfaktor angibt, welcher der physikalischen Größe entspricht, die durch die von der Informationserwerbungseinheit (11) erworbenen physikalischen Größeninformationen angegeben ist, wobei der Bestimmungsfaktor ein zukünftiger Anstiegs/-Senkungsbetrag einer thermischen Last, welcher von der Gerät-Steuereinheit mithilfe künstlicher Intelligenz vorhergesagt wird, der Umgebung ist, in der sich das zu steuernde Gerät befindet, und Erwerben, als einen Bestimmungsfaktor für den von der Gerät-Steuereinheit (4) bestimmten Steuerungsinhalt, eines Bestimmungsfaktors, der in dem zweiten Knoten angegeben ist, der in dem ausgewählten Entscheidungsbaums enthalten ist.

## Revendications

1. Un dispositif de commande d'appareil comprenant une unité de commande d'appareil et un dispositif d'identification de facteur (5), dans lequel le dispositif d'identification de facteur comprend :
une unité d'acquisition d'informations (11) configurée pour acquérir, depuis l'unité de commande d'appareil (4) configurée pour déterminer un contenu de commande pour l'avenir concernant un appareil à commander, des informations de grandeur physique indiquant une grandeur physique d'un environnement dans lequel l'appareil à commander est disposé, dans lequel l'unité de commande d'appareil est configurée pour utiliser les informations de grandeur physique dans une étape finale de détermination du contenu de commande parmi une pluralité d'étapes incluses dans un processus de détermination du contenu de commande ;
une unité d'identification de facteur de détermination (12, 15) configurée pour identifier un facteur de détermination du contenu de commande déterminé par l'unité de commande d'appareil sur la base de la grandeur physique indiquée par les informations de grandeur physique acquises par l'unité d'acquisition d'informations ; et
une unité de génération de données d'affichage (13, 16, 19) configurée pour générer des données d'affichage pour afficher le facteur de détermination identifié par l'unité d'identification de facteur de détermination et pour délivrer les données d'affichage, dans lequel
l'unité d'acquisition d'informations (11) est configurée pour :
acquérir, depuis l'unité de commande d'appareil (4), des informations de commande indiquant le contenu de commande en plus des informations de grandeur physique ; et
l'unité d'identification de facteur de détermination (12, 15) est configurée pour :
sélectionner, parmi une pluralité d'arbres de décision, dans lesquels une pluralité de facteurs de détermination pour le contenu de commande est indiquée hiérarchiquement, un arbre de décision comprenant un premier nœud indiquant le contenu de commande indiqué par les informations de commande acquises par l'unité d'acquisition d'informations (11) et un second nœud indiquant un facteur de détermination correspondant à la grandeur physique indiquée par les informations de grandeur physique acquises par l'unité d'acquisition d'informations (11), le facteur de détermination étant une quantité d'augmentation/de diminution future d'une charge thermique, qui est prédite par l'unité de commande d'appareil à l'aide d'une intelligence artificielle, de l'environnement dans lequel l'appareil à commander est disposé, et acquérir, en tant que facteur de détermination du contenu de commande déterminé par l'unité de commande d'appareil (4), un facteur de détermination indiqué dans le second nœud inclus dans l'arbre de décision sélectionné.

2. Le dispositif de commande d'appareil selon la revendication 1, comprenant en outre une unité d'acceptation de demande (14) configurée pour accepter une demande d'identification d'un facteur de détermination indirect du contenu de commande déterminé par l'unité de commande d'appareil, dans lequel l'unité d'identification de facteur de détermination (15) est configurée pour :
lorsque l'unité d'acceptation de demande accepte une demande d'identification d'un facteur de détermination indirect, acquérir, en tant que facteur de détermination indirect du contenu de commande, le facteur de détermination indiqué dans un nœud dans une couche inférieure au second nœud inclus dans l'arbre de décision sélectionné.

3. Le dispositif de commande d'appareil selon la revendication 1, dans lequel l'unité de génération de données d'affichage (16) est configurée pour : générer les données d'affichage en appliquant le facteur de détermination identifié par l'unité d'identification de facteur de détermination à un modèle de phrase à remplir par le facteur de détermination.

4. Le dispositif de commande d'appareil selon la revendication 1, comprenant en outre une unité de génération de graphe (18) configurée pour générer un graphe indiquant un changement temporel de la grandeur physique indiquée par les informations de grandeur physique acquises par l'unité d'acquisition d'informations, dans lequel
l'unité de génération de données d'affichage (19) est configurée pour :
générer les données d'affichage pour afficher le facteur de détermination identifié par l'unité d'identification de facteur de détermination et le graphe généré par l'unité de génération de graphe, et délivrer les données d'affichage.

5. Le dispositif de commande d'appareil selon la revendication 4, dans lequel
l'unité d'acquisition d'informations (11) est configurée pour :
acquérir, depuis l'unité de commande d'appareil, une valeur d'observation liée au facteur de détermination identifié par l'unité d'identification de facteur de détermination parmi des valeurs d'observation d'un environnement dans lequel l'appareil à commander est disposé en plus des informations de grandeur physique, et
l'unité de génération de graphe (18) est configurée pour :
générer un graphe indiquant un changement temporel de la valeur d'observation acquise par l'unité d'acquisition d'informations.

6. Le dispositif de commande d'appareil selon l'une quelconque des revendications précédentes, comprenant en outre :
un dispositif d'affichage (6) configuré pour afficher le facteur de détermination du contenu de commande selon les données d'affichage générées par l'unité de génération de données d'affichage.

7. Le dispositif de commande d'appareil selon la revendication 6, dans lequel
l'unité de commande d'appareil (4) est configurée pour déterminer le contenu de commande pour l'avenir pour l'appareil à commander à partir d'une valeur d'observation actuelle d'un environnement dans lequel l'appareil à commander est disposé, d'une valeur passée d'observation de l'environnement dans lequel l'appareil à commander est disposé, et d'un contenu de commande passé pour l'appareil à commander.

8. Une méthode d'identification de facteur comprenant :
la détermination, par une unité de commande d'appareil, d'un contenu de commande pour l'avenir concernant un appareil à commander, dans laquelle l'unité de commande d'appareil utilise des informations de grandeur physique indiquant une grandeur physique d'un environnement dans lequel l'appareil à commander est disposé dans une étape finale de détermination du contenu de commande parmi une pluralité d'étapes incluses dans un processus de détermination du contenu de commande ;
l'acquisition, par une unité d'acquisition d'informations (11), depuis l'unité de commande d'appareil, des informations de grandeur physique ;
l'identification, par une unité d'identification de facteur de détermination (12, 15), d'un facteur de détermination du contenu de commande déterminé par l'unité de commande d'appareil sur la base de la grandeur physique indiquée par les informations de grandeur physique acquises par l'unité d'acquisition d'informations ; et
la génération, par une unité de génération de données d'affichage (13, 16, 19), de données d'affichage pour afficher le facteur de détermination identifié par l'unité d'identification de facteur de détermination, et la délivrance des données d'affichage par l'unité de génération de données d'affichage, dans laquelle
l'acquisition comprend en outre :
l'acquisition, depuis l'unité de commande d'appareil (4), d'informations de commande indiquant le contenu de commande en plus de l'acquisition des informations de grandeur physique ; et
l'identification comprend :
la sélection, parmi une pluralité d'arbres de décision, dans lesquels une pluralité de facteurs de détermination pour le contenu de commande est indiquée hiérarchiquement, d'un arbre de décision comprenant un premier nœud indiquant le contenu de commande indiqué par les informations de commande acquises par l'unité d'acquisition d'informations (11) et un second nœud indiquant un facteur de détermination correspondant à la grandeur physique indiquée par les informations de grandeur physique acquises par l'unité d'acquisition d'informations (11), le facteur de détermination étant une quantité d'augmentation/de diminution future d'une charge thermique, qui est prédite par l'unité de commande d'appareil à l'aide d'une intelligence artificielle, de l'environnement dans lequel l'appareil à commander est disposé, et l'acquisition, en tant que facteur de détermination du contenu de commande déterminé par l'unité de commande d'appareil (4), d'un facteur de détermination indiqué dans le second nœud inclus dans l'arbre de décision sélectionné.
